(19) Europäisches Patentamt
European Patent Office
Office européen des brevets

(11) EP 2 657 078 B1

(12) **EUROPEAN PATENT SPECIFICATION**

(45) Date of publication and mention
of the grant of the patent:
**25.11.2015 Bulletin 2015/48**

(51) Int Cl.:
**B60Q 1/18** (2006.01)     **B60Q 1/12** (2006.01)
**B62J 6/02** (2006.01)

(21) Application number: **13164119.3**

(22) Date of filing: **17.04.2013**

(54) **Headlight unit and headlight system for use in vehicle that leans into turns, vehicle that leans into turns, and method for controlling a headlight unit**

Scheinwerfereinheit und Scheinwerfersystem zur Verwendung in einem Fahrzeug, das sich in Kurven lehnt, und Fahrzeug, das sich in Kurven lehnt, und Verfahren zur Steuerung einer Scheinwerfereinheit

Unité et système de phare pour utilisation dans un véhicule qui penche dans les virages, véhicule qui penche dans les virages et procédé de commande d'une unité de phare

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.04.2012 JP 2012104062**

(43) Date of publication of application:
**30.10.2013 Bulletin 2013/44**

(73) Proprietor: **Yamaha Hatsudoki Kabushiki Kaisha**
**Iwata-shi, Shizuoka 438-8501 (JP)**

(72) Inventors:
• **Ikeda, Takeshi**
  **Iwata-shi,, Shizuoka 438-8501 (JP)**
• **Ooba, Junichi**
  **Iwata-shi, Shizuoka 438-8501 (JP)**
• **Kosugi, Makoto**
  **Iwata-shi, Shizuoka 438-8501 (JP)**

(74) Representative: **Grünecker Patent- und Rechtsanwälte**
**PartG mbB**
**Leopoldstraße 4**
**80802 München (DE)**

(56) References cited:
**EP-A1- 1 659 028        DE-U1-202004 010 950**
**GB-A- 2 443 737        JP-A- 2008 001 305**
**US-A1- 2005 180 139    US-A1- 2005 270 785**
**US-A1- 2010 213 872**

**Description**

The present invention relates to a headlight unit according to the preamble of independent claim 1 and a headlight system for use in a vehicle that leans into turns, a vehicle that leans into turns, and a method for controlling a headlight unit in a vehicle that leans into turns according to the preamble of independent claim 15. Such a headlight unit and such a method can be taken from the prior art document US 2005/0270785 A1.

In general, in a vehicle that leans into turns (such as saddle-ride type vehicles including motorcycles, three-wheeled motor vehicles, snowmobiles, and ATVs (all terrain vehicles)), when the vehicle corners or turns at an intersection, a rider operates a handlebar and additionally shifts his/her own weight in order to counteract centrifugal force acting on a vehicle body. Thereby, the vehicle turns with an attitude (hereinafter, also referred to as "lean attitude") leaning to the inner side of a curve. On the other hand, in a vehicle that does not lean into turns, for example, in an automobile, when the vehicle corners or turns at an intersection, a rider operates a steering wheel and turns with centrifugal force acting on a vehicle body. Therefore, in the vehicle that does not lean into turns, the vehicle body leans to the outer side of a curve due to the centrifugal force.

In the vehicle that leans into turns, the turning is made with an active use of the weight shifting of the rider himself/herself. Therefore, the vehicle body largely leans. In the vehicle that does not lean into turns, the vehicle body leans to the outer side of the curve due to the centrifugal force. The degree of this leaning varies depending on the running speed of the vehicle and the magnitude (radius) of the curve, and this leaning of the vehicle body is not utilized for the turning. In the vehicle that does not lean into turns, it is preferable that the amount of leaning to the outer side of the curve due to the centrifugal force is small.

Thus, at a time of cornering or turning at an intersection, the vehicle that leans into turns causes the vehicle body to lean to the inner side of the curve with a relatively large amount of leaning, while the vehicle that does not lean into turns causes the vehicle body to lean to the outer side of the curve with a relatively small amount of leaning.

Normally, a vehicle is provided with a plurality of lights irrespective of whether or not the vehicle leans into turns. The lights include a light intended mainly to ensure a field of view of a rider of the vehicle and a light intended mainly to enable a surrounding vehicle or the like to recognize the presence of the own vehicle. A headlight is the light intended mainly to ensure the field of view of the rider of the vehicle, and in general, is configured to switch between a high beam (running headlight) and a low beam (passing headlight).

The high beam, which emits light in a horizontal (upward) direction, ensures a field of view at a long distance. Generally, in order to avoid dazzling a rider of a surrounding vehicle, the high beam is used in a situation where there is no vehicle or the like existing ahead at night. The low beam, which emits light in a downward direction, is used even in a situation where there is a vehicle or the like existing ahead. Therefore, in a normal case, a vehicle often runs with the low beam turned on.

When the vehicle that leans into turns is running on a straight road, an illumination range of a headlight light source (low beam) spreads evenly to the left and right in an area ahead in an advancing direction and below a horizontal plane including the headlight light source. When the vehicle that leans into turns is running on a road curving to the left, the vehicle runs with the vehicle body inclined to the left. Accordingly, the illumination range of the headlight light source spreads downward to the left. As a result, a nearer position on a running lane is illuminated. Thus, the illumination range in an area inside the curve and ahead in the advancing direction is reduced.

Therefore, a vehicle has been proposed in which, in addition to a main headlight that illuminates an area ahead of the vehicle, a pair of right and left sub headlights that are turned on depending on the magnitude of a lean angle (angle of inclination of a vehicle body to the inner side of a curve relative to an upright state thereof) are provided as the headlight (WO 2010/061651 A). Each of the sub headlights includes two light sources (filaments). In the vehicle disclosed in WO 2010/061651 A, when the lean angle increases and reaches a predetermined value, one of the two light sources included in the sub headlight is turned on. When the lean angle further increases and reaches a predetermined value, the two light sources are turned on.

A situation where the vehicle corners or turns at an intersection is not always the same, and there are a wide variety of running scenes. The present inventors have studied cases where the vehicle disclosed in WO 2010/061651 A runs in a wide variety of scenes, and found out the following problems.

In the vehicle disclosed in WO 2010/061651 A, when the vehicle corners or turns at an intersection, the illumination range of the headlight within a rider's field of view largely changes, which sometimes causes the rider to feel uncomfortable.

For example, even on a road having a curve with the same radius, some vehicles pass through the curve at a relatively low speed, and other vehicles pass through the curve at a relatively high speed. At this time, the lean angle of the vehicle passing at the high speed is changed more rapidly than the lean angle of the vehicle passing at the low speed. That is, even though a vehicle passes through a road having a curve with the same radius, the amount of change in the lean angle per unit time varies depending on the vehicle speed.

Furthermore, even when the vehicle is running at the same speed, the lean angle is gently changed in a curve with a large radius while the lean angle is rapidly changed in a curve with a small radius. Accordingly, for example, in a case of continuously passing through a plurality of curves having different radii during touring on a mountain road, the amount of change in the lean angle per unit time changes in each curve, even though the speed does not change so much.

In the vehicle disclosed in WO 2010/061651 A, the two light sources of the sub headlight are sequentially turned on in accordance with an increase in the lean angle. Accordingly, at a time point when a light source is turned on, an illumination range of this light source is additionally provided, which can suppress a reduction in the illumination range which may be caused by inclination of the vehicle.

Here, in accordance with an increase in the lean angle of the vehicle, an illumination range of a headlight produced on a road surface continuously approaches to the vehicle, and accordingly a cut-off line of the headlight also approaches to the vehicle. The speed of movement of the cut-off line of the headlight light source varies depending on the amount of change in the lean angle per unit time. In other words, the speed of movement of the cut-off line varies depending on a running scene.

Therefore, in a case where the speed of movement of the cut-off line largely changes upon each turn in a curve or in a case where the speed of movement of the cut-off line excessively increases, the rider may feel uncomfortable.

The present invention has been made in view of the problems described above, and an object of the present invention is to provide a headlight unit and a headlight system for use in a vehicle that leans into turns, a vehicle that leans into turns, and a method for controlling a headlight unit in a vehicle that leans into turns that can prevent a rider from feeling uncomfortable about a change in an illumination range in the course of an increase or decrease in the lean angle of a vehicle body.

According to the present invention said object is solved by a headlight unit having the features of independent claim 1, a headlight system having the features of claim 12, a vehicle that leans into turns having the features of claim 14, and a method for controlling a headlight unit in a vehicle that leans into turns having the features of independent claim 15. Preferred embodiments are laid down in the dependent claims.

Accordingly, it is provided (1) a headlight unit for use in a vehicle that leans into turns, wherein

the headlight unit includes a headlight light source whose illumination range is partially or entirely contained in one side of the vehicle with respect to a width direction of the vehicle when the vehicle is in an upright state,

the brightness of the headlight light source changes in accordance with a lean angle of the vehicle,

when the lean angle of the vehicle leaning to the one side with respect to the width direction of the vehicle takes a reference value that is set for the headlight light source, the headlight light source lights up with a first brightness,

when the lean angle of the vehicle changes from the reference value to an upper value that is greater than the reference value, the brightness of the headlight light source changes from the first brightness to a second brightness that is higher than the first brightness.

In a configuration of (1), when the lean angle of the vehicle changes from the reference value to the upper value, the brightness of the headlight light source changes from the first brightness to the second brightness. Accordingly, the brightness of the headlight light source increases in accordance with an increase in the lean angle. As a result, the headlight light source produces an enlarged illumination range having a predetermined illuminance. This can reduce the speed of approach of a cut-off line to the vehicle in accordance with the increase in the lean angle. Since the speed of movement of the cut-off line is reduced, a change in the speed of movement of the cut-off line which occurs in each turn can be made small. This enables suppression of an uncomfortable feeling, which may otherwise be given to the rider.

Since a reduction in the illumination range of the headlight is suppressed, occurrence of a situation where a position a rider desires to see is not sufficiently covered by the illumination range of the headlight can be suppressed. This enables suppression of an uncomfortable feeling, which may otherwise be given to the rider.

Here, in order to suppress the speed of movement of the cut-off line, it is conceivable to gradually increase the brightness of the headlight light source in accordance with time having elapsed since the lean angle reached the reference value. In this case, however, a change in the brightness of the headlight light source is linked to time. Accordingly, the responsiveness to a change in the lean angle is lowered, and there is a risk that a time period may occur during which the position the rider desires to see is not coincident with the illumination range of the headlight.

In this respect, in the configuration of (1), the brightness of the headlight light source changes in accordance with the lean angle of the vehicle. This can reduce a change in the speed of movement of the cut-off line which occurs in each turn while ensuring the responsiveness to a change in the lean angle. This also enables suppression of occurrence of a time period during which the position the rider desires to see is not sufficiently covered by the illumination range of the headlight.

(2) The headlight unit according to (1), wherein

the headlight light source includes a sub headlight light source that illuminates, at the one side with respect to the width direction of the vehicle, an area ahead and outward of the vehicle with respect to the width direction of the vehicle, the sub headlight light source is configured such that an illumination range thereof contains a space above a horizontal line when the vehicle is in the upright state,

when the lean angle of the vehicle reaches a reference value that is set for the sub headlight light source, the illumination range of the sub headlight light source is located in a space below a horizontal line.

In a configuration of (2), when the lean angle of the vehicle reaches the reference value so that the sub headlight light source lights up with the first brightness, the illumination range of the sub headlight light source is located in a space below the horizontal line. Accordingly, occurrence of glare can be suppressed.

(3) The headlight unit according to (1) or (2), wherein
the headlight light source includes a sub headlight light source that illuminates, at the one side with respect to the width direction of the vehicle, an area ahead and outward of the vehicle with respect to the width direction of the vehicle, a cut-off line of the sub headlight light source obtained when the lean angle of the vehicle reaches a reference value that is set for the sub headlight light source is closer to horizontal than a cut-off line of the sub headlight light source obtained when the vehicle is in the upright state and a cut-off line of the sub headlight light source obtained when the lean angle of the vehicle reaches an upper value that is set for the sub headlight light source.

In a configuration of (3), when the lean angle reaches the reference value, the cut-off line of the sub headlight light source is closer to horizontal. Accordingly, when the headlight light source lights up with the first brightness, a wide illumination range can be ensured on a road surface, with prevention of glare.

(4) The headlight unit according to any one of (1) to (3), wherein
the headlight light source comprises a plurality of the headlight light sources,
the reference value and the upper value are individually set for each of the headlight light sources.

In a configuration of (4), along with an increase in the lean angle, the headlight light sources, sequentially from the one having the smallest reference value set therefor, lights up with the first brightness and then lights up with the second brightness. Sequentially changing the brightness of each headlight light source in this manner can slow the speed of movement of the cut-off line while suppressing a reduction in the illumination range of the headlight light source in accordance with the increase in the lean angle.

(5) The headlight unit according to (4), wherein
the upper value of one headlight light source is smaller than the reference value of another headlight light source for which the next greatest reference value after that of the one headlight light source is set.

There is the upper limit in an output of the headlight light source, and energy such as fuel loaded on the vehicle is also limited. Therefore, it is preferable to make effective use of the headlight light source based on the relationship between the energy efficiency and the illumination range. When the lean angle reaches the reference value of a second headlight light source so that the second headlight light source lights up with the first brightness, the illumination range of a first headlight light source having been reduced in accordance with an increase in the lean angle is compensated by the illumination range of the second headlight light source. Thus, even if the brightness of the first headlight light source is increased after the second headlight light source lights up with the first brightness, the advantage thereof would not be sufficiently obtained. Therefore, in a configuration of (5), in the course of an increase in the lean angle, the brightness of the first headlight light source is changed to the second brightness before the second headlight light source lights up with the first brightness. This allows an effective use of the respective headlight light sources.
Here, the first headlight light source means such a headlight light source that the reference value set therefor is the first to be reached by the lean angle in the course of the lean angle increasing and reaching the reference value of the headlight light source. The second headlight light source means such a headlight light source that the reference value set therefor is the next to be reached by the lean angle after the reference value of the first headlight light source is reached.

(6) The headlight unit according to any one of (1) to (5), wherein
when the lean angle of the vehicle reaches a specific value that is greater than the upper value set for the headlight light source, the brightness of the headlight light source becomes lower than the second brightness.

As the lean angle increases in ascending order of the reference value, the upper value, and the specific value, the illumination range of the headlight light source gradually approaches to the vehicle, which makes it difficult to compensate a reduction in the illumination range along with the increase in the lean angle. Moreover, as the illumination range approaches to the vehicle, the distance between the headlight light source and the illumination range produced on the road surface becomes shorter. Therefore, there is the possibility that the rider may feel uncomfortable because of reflection from the road surface. In this respect, in a configuration of (6), when the lean angle of the vehicle reaches the specific value, the brightness of the headlight light source becomes lower than the second brightness. Accordingly, the possibility that the rider may feel uncomfortable because of reflection from the road surface can be lowered, and additionally the power consumption can be cut.

(7) The headlight unit according to (6), wherein
the headlight light source includes a sub headlight light source that illuminates, at the one side with respect to the width direction of the vehicle, an area ahead and outward of the vehicle with respect to the width direction of the vehicle, the reference value, the upper value, and the specific value are individually set for each of the headlight light sources.

In a configuration of (7), along with an increase in the lean angle, the headlight light sources, sequentially from the one having the smallest reference value set therefor, lights up with the first brightness, then lights up with the second brightness, and then lights up with a brightness lower than the second brightness. Sequentially changing the brightness of each headlight light source in this manner can slow the speed of movement of the cut-off line while suppressing a reduction in the illumination range of the headlight light source in accordance with the increase in the lean angle. Moreover, the possibility that the rider may feel uncomfortable because of reflection from the road surface can be lowered, and additionally the power consumption can be cut.

(8) The headlight unit according to (7), wherein
the specific value of one headlight light source is greater than the upper value of another headlight light source for which the next greatest reference after that of the one headlight light source is set.

In a state where the second headlight light source lights up with the second brightness so that the illumination range of the second headlight light source compensates the illumination range of the first headlight light source having been reduced along with an increase in the lean angle, even if the first headlight light source continues to light up with a high brightness, the advantage thereof would not be sufficiently obtained. Therefore, in a configuration of (8), in the course of an increase in the lean angle, after the second headlight light source lights up with the second brightness, the first headlight light source lights up with a brightness lower than the second brightness. This can cut the power consumption.

(9) The headlight unit according to any one of (1) to (8), wherein
an optical axis of the headlight light source is fixed,
the headlight light source whose optical axis is fixed lights up with the first brightness when the lean angle of the vehicle reaches the reference value that is set for the headlight light source, and lights up with the second brightness when the lean angle of the vehicle reaches the upper value that is set for the headlight light source.

In order to suppress the speed of movement of the cut-off line, it is conceivable to provide a movable mechanism and a movable member for physically changing the orientation of the light source and to control the movable mechanism and the movable member in accordance with an increase in the lean angle, thereby adjusting the orientation of the light source. However, to provide the movable mechanism and the movable member, it is necessary that a space for them is ensured in the vehicle. Therefore, this method is not suitable for a relatively small vehicle.
In this respect, in a configuration of (9), the optical axis of the headlight light source is fixed. Therefore, any movable mechanism and any movable member for moving the optical axis of the headlight light source are not required. This enables avoidance of an increase in the size of the headlight unit.

(10) The headlight unit according to any one of (1) to (9), wherein
the headlight light source includes a sub headlight light source that illuminates, at the one side with respect to the width direction of the vehicle, an area ahead and outward of the vehicle with respect to the width direction of the vehicle, in a time period from when the lean angle of the vehicle reaches a lower value that is smaller than the reference value set for the headlight light source to when the lean angle of the vehicle reaches the reference value, the sub headlight light source lights up with a brightness lower than the first brightness.

After the lean angle reaches the upper value so that the first headlight light source lights up with the second brightness, the illumination range of the first headlight light source is gradually reduced in accordance with an increase in the lean angle. Accordingly, in a configuration of (10), before the lean angle reaches the reference value of the second headlight light source, the second headlight light source is turned on to compensate the illumination range of the first headlight light source which is reduced in accordance with an increase in the lean angle. This can reduce the possibility of occurrence of a time period during which the position the rider desires to see is not sufficiently covered by the illumination range of the headlight.

(11) The headlight unit according to (10), wherein
the sub headlight light source comprises a plurality of the sub headlight light sources,
the reference value, the upper value, and the lower value of each of the sub headlight light sources are individually set to the headlight light source,
the upper value of one sub headlight light source is equal to or greater than the lower value of another sub headlight light source for which the next greatest reference value after that of the one sub headlight light source is set.

In a configuration of (11), in the course of an increase in the lean angle, when the first headlight light source lights up with the second brightness or before the first headlight light source lights up with the second brightness, the second headlight light source lights up with a brightness lower than the first brightness. Accordingly, from the time when the lean angle exceeds the upper value of the first headlight light source so that the illumination range of the first headlight light source starts to be reduced, the illumination range of the second headlight light source starts to compensate the illumination range of the first headlight light source. At this time, the brightness of the second headlight light source is lower than the first brightness. Therefore, even though the illumination range of the first headlight light source overlaps the illumination range of the second headlight light source, a resulting illumination range is not excessively bright. Then, the illumination range of the first headlight light source is reduced, and when the lean angle reaches the reference value of the second headlight light source, the second headlight light source lights up with the first brightness. This achieves a smooth shift from a state where the position the rider desires to see is covered by the illumination range of the first headlight light source to a state where the position the rider desires to see is covered by the illumination range of the second headlight light source.

(12) A headlight system for use in a vehicle that leans into turn,
the headlight system including:

the headlight unit according to any one of (1) to (11);
a control part that changes the brightness of the headlight light source in accordance with the lean angle of the vehicle; and
a detection part that detects a variable available for obtaining the lean angle of the vehicle,
wherein, when the lean angle of the vehicle leaning to the one side with respect to the width direction of the vehicle reaches the reference value that is set for the headlight light source, the control part causes the headlight light source to light up the first brightness, and when the lean angle of the vehicle reaches the upper value that is set for the headlight light source, the control part causes the headlight light source to light up with the second brightness.

In a configuration of (12), an AFS (Adaptive Front-Lighting System) is achieved that enables suppression of occurrence of a situation where the rider feels uncomfortable about a change in the illumination range.

(13) A vehicle that leans into turn,
the vehicle including the system according to (12).

A configuration of (13) enables suppression of occurrence of a situation where the rider feels uncomfortable about a change in the illumination range.

Here, according to the present teaching, the optical axis is a straight line that passes through a light source and the center of a maximum illuminance portion of emitted light. The center of the maximum illuminance portion of the emitted light can be identified by emitting light from a light source to a screen that is placed ahead of the light source. This screen illuminance test can be implemented by a method specified in JIS D1619. Also, the cut-off line and the illumination range having the predetermined illuminance can be identified based on a result (such as an isolux distribution map) of the screen illuminance test mentioned above. According to the present teaching, the illumination range means an illumination range having a predetermined illuminance, and this predetermined illuminance is not particularly limited. The cut-off line and the illumination range having the predetermined illuminance in a plan view can be identified based on a road-surface light distribution that is obtained by converting the result of the screen illuminance test mentioned above into the road-surface light distribution. The conversion into the road-surface light distribution can be implemented by a conventionally known method. To be specific, through commonly-used drawing and geometric calculation, conversion from a screen illuminance value into a road-surface illuminance value can be performed. In such a case, the following expression (I) is usable. In the following expression (I), D represents a light source, E represents a point on a road surface, and F represents a point of intersection at which the screen placed between D and E intersects with a straight line connecting D to E.

$$\text{Road-surface illuminance (Lx)} = \text{Screen Illuminance (Lx)} \times [(\text{Distance between D and F (m)}) / (\text{Distance between D and E (m)})]^2 \quad \ldots \text{(I)}$$

These and other objects, features, aspects and advantages of the present invention will become apparent to those skilled in the art from the following detailed description, which, taken in conjunction with the accompanying drawings, discloses some preferred embodiments.

[EFFECTS OF THE INVENTION]

The present invention enables suppression of occurrence of a situation where a rider feels uncomfortable about a change in an illumination range.

[BRIEF DESCRIPTION OF THE DRAWINGS]

[FIG. 1] A front elevational view schematically showing a motorcycle according to a first preferred embodiment.
[FIG. 2] A block diagram showing a basic configuration concerning sub headlight light sources of the motorcycle shown in FIG. 1.
[FIG. 3] A front elevational view schematically showing optical axes and cut-off lines of the sub headlight light sources of the motorcycle in an upright state.
[FIG.4] A chart showing the relationship between a lean angle of the motorcycle and the brightnesses of the sub headlight light sources according to the first preferred embodiment.

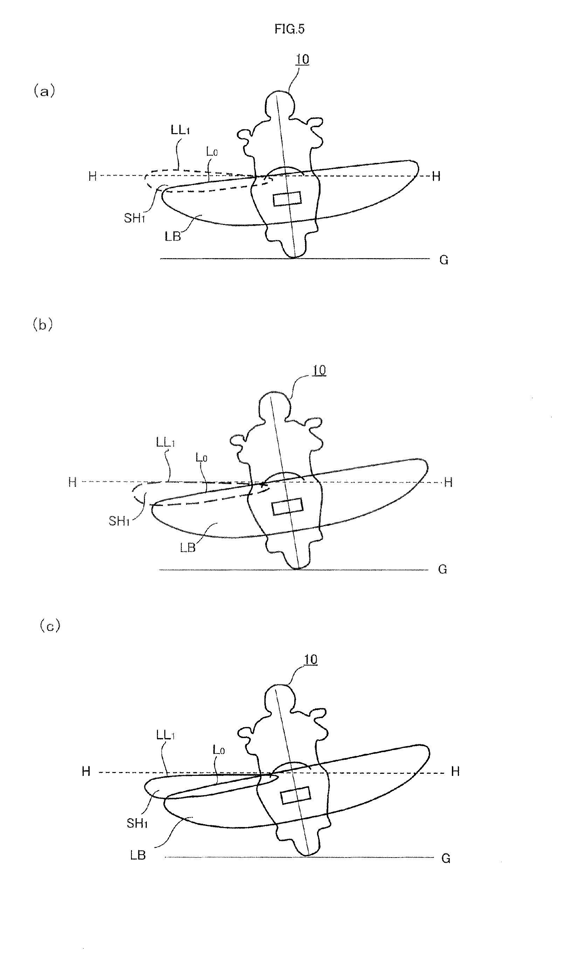

[FIG. 5] (a) is a diagram schematically showing a screen light distribution obtained when the lean angle of the motorcycle takes a value that is in the range from a lower value $T_1$ to a reference value $K_1$ and is relatively close to the lower value $T_1$; (b) is a diagram schematically showing a screen light distribution obtained when the lean angle of the motorcycle takes a value that is in the range from the lower value $T_1$ to the reference value $K_1$ and is greater than the lean angle shown in (a); and (c) is a diagram schematically showing a screen light distribution obtained when the lean angle of the motorcycle takes the reference value $K_1$.
[FIG. 6] (a) is a diagram schematically showing a screen light distribution obtained when the lean angle of the motorcycle takes an upper value $U_1$, (b) is a diagram schematically showing a screen light distribution obtained when the lean angle of the motorcycle takes a value that is in the range from a lower value $T_2$ to a reference value $K_2$; and (c) is a diagram schematically showing a screen light distribution obtained when the lean angle of the motorcycle takes the reference value $K_2$.
[FIG. 7] (a) is a diagram schematically showing a screen light distribution obtained when the lean angle of the motorcycle takes a value that is in the range from a lower value $T_3$ to a reference value $K_3$; and (b) is a diagram schematically showing a screen light distribution obtained when the lean angle of the motorcycle takes the reference value $K_3$.
[FIG. 8] A diagram illustrating a light distribution, schematically showing an illumination range of a headlight produced on a road surface at a time when the lean angle of the motorcycle takes a value that is in the range from the lower value $T_1$ to the reference value $K_1$ and is relatively close to the lower value $T_1$.
[FIG. 9] A diagram illustrating a light distribution, schematically showing an illumination range of the headlight produced on a road surface at a time when the lean angle of the motorcycle takes a value that is in the range from the lower value $T_1$ to the reference value $K_1$ and is greater than the lean angle shown in FIG. 8.
[FIG. 10] A diagram illustrating a light distribution, schematically showing an illumination range of the headlight produced on a road surface at a time when the lean angle of the motorcycle takes the reference value $K_1$.
[FIG. 11] A diagram illustrating a light distribution, schematically showing an illumination range of the headlight produced on a road surface at a time when the lean angle of the motorcycle takes the upper value $U_1$.
[FIG. 12] A diagram illustrating a light distribution, schematically showing an illumination range of the headlight produced on a road surface at a time when the lean angle of the motorcycle takes a value that is in the range from the lower value $T_2$ to the reference value $K_2$.
[FIG. 13] A diagram illustrating a light distribution, schematically showing an illumination range of the headlight produced on a road surface at a time when the lean angle of the motorcycle takes the reference value $K_2$.
[FIG. 14] A diagram illustrating a light distribution, schematically showing an illumination range of the headlight produced on a road surface at a time when the lean angle of the motorcycle takes an upper value $U_2$.

[FIG. 15] A diagram illustrating a light distribution, schematically showing an illumination range of the headlight produced on a road surface at a time when the lean angle of the motorcycle takes a value that is in the range from the lower value $T_3$ to the reference value $K_3$.

[FIG. 16] A diagram illustrating a light distribution, schematically showing an illumination range of the headlight produced on a road surface at a time when the lean angle of the motorcycle takes the reference value $K_3$.

[FIG. 17] A diagram illustrating a light distribution, schematically showing an illumination range of the headlight produced on a road surface at a time when the lean angle of the motorcycle takes the upper value $U_3$.

[FIG. 18] A diagram showing the relationship between the lean angle of the motorcycle and an illumination distance of the headlight illuminating a path of the motorcycle according to the first preferred embodiment.

[FIG. 19] A chart showing the relationship between the lean angle of the motorcycle and the brightnesses of the sub headlight light sources according to a second preferred embodiment.

[FIG. 20] A diagram showing the relationship between the lean angle of the motorcycle and the illumination distance of the headlight illuminating a path of the motorcycle according to the second preferred embodiment.

[EMBODIMENTS FOR CARRYING OUT THE PRESENT TEACHING]

<First Embodiment>

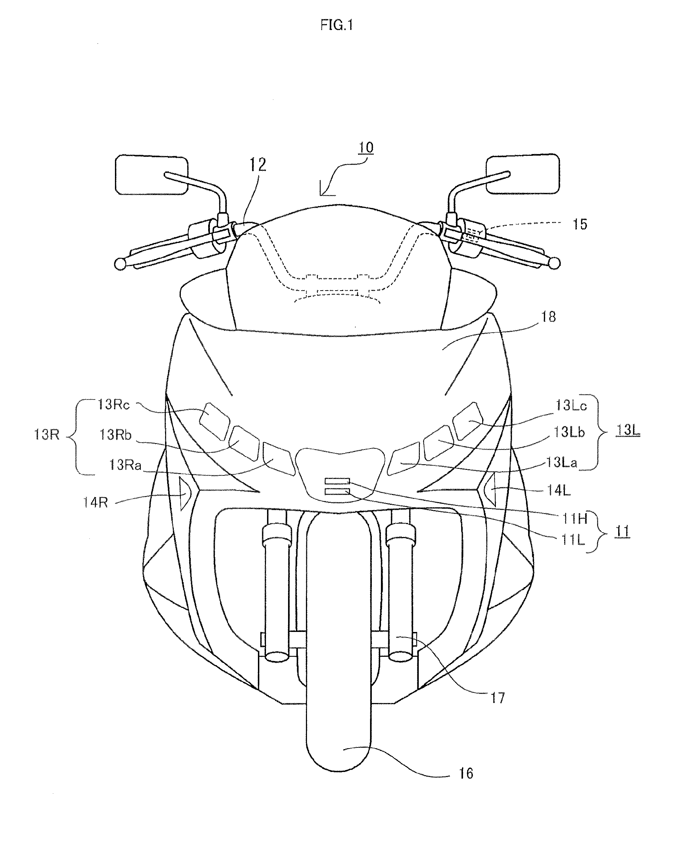

FIG. 1 is a front elevational view schematically showing a motorcycle according to a first preferred embodiment.

A motorcycle 10 is an example of a vehicle that leans into turns according to the present teaching. According to the present teaching, no particular limitation is put on the vehicle that leans into turns. For example, saddle-ride type vehicles including motorcycles, three-wheeled motor vehicles, snowmobiles, and ATVs (all terrain vehicles) may be mentioned. In the following description, the terms "front" and "back" are terms with respect to an advancing direction of the vehicle, the terms "up" and "down" are terms with respect to the vertical direction of the vehicle, and the terms "right" and "left" are terms with respect to a rider.

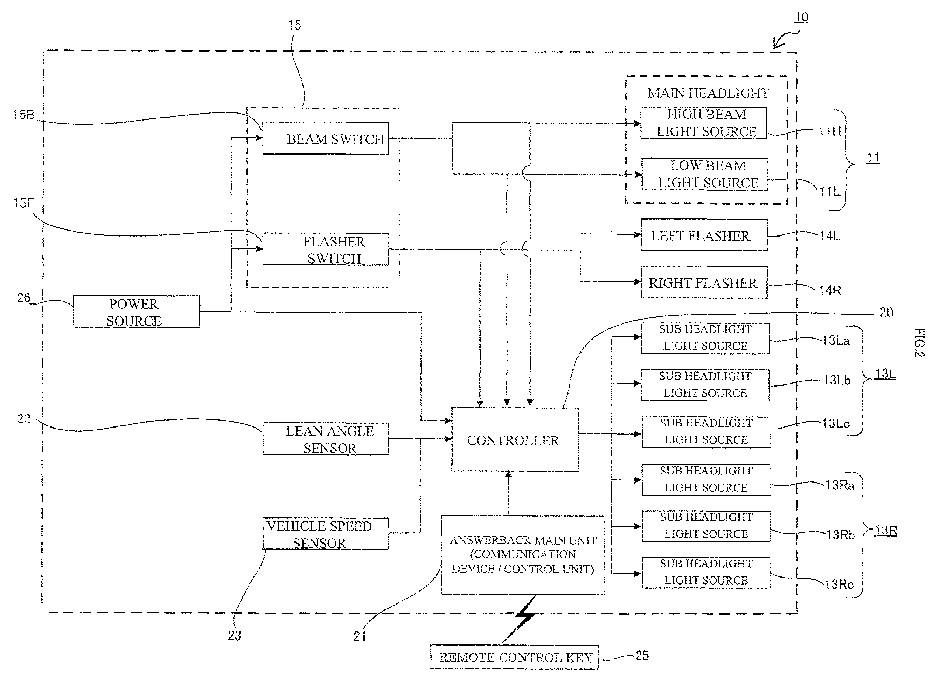

The motorcycle 10 includes a handlebar 12. An operation switch 15 is provided in a left portion of the handlebar 12 with respect to a width direction of the vehicle. The operation switch 15 includes a beam switch 15B and a flasher switch 15F (see FIG. 2). A steering shaft (not shown) is fixed to a center portion of the handlebar 12 with respect to the width direction of the vehicle. The steering shaft extends downward through a headpipe (not shown). A frontfork 17 is provided at a lower end of the steering shaft. A front wheel 16 is rotatably supported at the lower end of the frontfork 17. The headpipe is a member constituting a vehicle body frame. According to the present teaching, no particular limitation is put on the vehicle body frame, and a conventionally known configuration is adoptable.

A front cover 18 covers a front part of the headpipe having the steering shaft passing therethrough. On a front surface of the front cover 18, a main headlight 11 is provided in a center portion with respect to the width direction of the vehicle. The main headlight 11 includes a high beam light source 11 H (running headlight) and a low beam light source 11 L (passing headlight). The high beam light source 11 H illuminates an area ahead of the motorcycle 10 at a height equal to or above a horizontal plane of the main headlight 11. The low beam light source 11 L illuminates an area ahead of the motorcycle 10 at a height below the horizontal plane of the main headlight 11.

The high beam light source 11 H and the low beam light source 11 L are configured such that only one of them is turned on in accordance with an operation performed on the beam switch 15B (see FIG. 2) by the rider.

The motorcycle 10 includes a sub headlight 13. The sub headlight 13 is composed of two sub headlight units 13L and 13R of variable light distribution type. Each of the sub headlight units 13L and 13R is provided at each side with respect to the width direction of the vehicle. The sub headlight unit 13L includes a plurality of sub headlight light sources 13La, 13Lb, and 13Lc. The sub headlight light sources 13La, 13Lb, and 13Lc are arranged in this order from the center toward the upper left with respect to the width direction of the vehicle. The sub headlight light sources 13La, 13Lb, and 13Lc illuminate an area ahead and left-lateral with respect to the width direction of the vehicle. Illumination ranges of the sub headlight light sources 13La, 13Lb, and 13Lc are arranged in this order from the center toward the upper left with respect to the width direction of the vehicle. The illumination ranges of the sub headlight light sources 13La, 13Lb, and 13Lc overlap one another. The sub headlight unit 13R includes a plurality of sub headlight light sources 13Ra, 13Rb, and 13Rc. The sub headlight light sources 13Ra, 13Rb, and 13Rc are arranged in this order from the center toward the upper right with respect to the width direction of the vehicle. The sub headlight light sources 13Ra, 13Rb, and 13Rc illuminate an area ahead and right-lateral with respect to the width direction of the vehicle. Illumination ranges of the sub headlight light sources 13Ra, 13Rb, and 13Rc are arranged in this order from the center toward the upper right with respect to the width direction of the vehicle. The illumination ranges of the sub headlight light sources 13Ra, 13Rb, and 13Rc overlap one another. Optical axes of the sub headlight light sources 13La to 13Lc, 13Ra to 13Rc are fixed, and not moved in accordance with a lean angle. A reflector (not shown) of the sub headlight light source is also fixed, and not moved in accordance with the lean angle. In this embodiment, no particular limitation is put on the sub headlight light source. For example, an LED is adoptable. A mono-focus type light source is also adoptable as the sub headlight light source. As for how the sub headlight light sources 13La to 13Lc, 13Ra to 13Rc are arranged in the motorcycle 10, the above-described arrangement manner is merely an illustrative example of the present teaching. The present teaching is not limited to this example.

Each of the sub headlight units 13L and 13R corresponds to the "headlight unit" of the present teaching.

Flashers 14L and 14R, serving as direction indicators, are provided at both sides of the motorcycle 10 with respect to the width direction of the vehicle. The flashers 14L and 14R are configured such that only one of them is turned on in accordance with an operation performed on the flasher switch 15F (see FIG. 2) by the rider.

The plurality of sub headlight light sources 13La, 13Lb, and 13Lc, which are positioned at the left side in the motorcycle 10 with respect to the width direction of the vehicle, are arranged between the main headlight 11 and the flasher 14L. The plurality of sub headlight light sources 13Ra, 13Rb, and 13Rc, which are positioned at the right side in the motorcycle 10, are arranged between the main headlight 11 and the flasher 14R. According to the present teaching, no particular limitation is put on the positional relationship between the sub headlight light source and the flasher with respect to the width direction of the vehicle. For example, it may be acceptable that the sub headlight light source is provided outside the flasher with respect to the width direction of the vehicle.

The plurality of sub headlight light sources 13La, 13Lb, and 13Lc are provided above the main headlight 11 and the flasher 14L. The plurality of sub headlight light sources 13Ra, 13Rb, and 13Rc are provided above the main headlight 11 and the flasher 14R.

The plurality of sub headlight light sources 13La to 13Lc, which are provided to the left with respect to the width direction of the vehicle, illuminate an area ahead of and left-lateral to the motorcycle 10. The plurality of sub headlight light sources 13Ra to 13Rc, which are provided to the right with respect to the width direction of the vehicle, illuminate an area ahead of and right-lateral to the motorcycle 10.

FIG. 2 is a block diagram showing a basic configuration concerning the sub headlight light sources 13La to 13Lc, 13Ra to 13Rc of the motorcycle 10 shown in FIG. 1.

The operation switch 15 includes the beam switch 15B and the flasher switch 15F. The beam switch 15B is connected to the high beam light source 11 H and the low beam light source 11 L included in the main headlight 11. When the rider operates the beam switch 15B, turn-on/turn-off of the high beam light source 11 H and the low beam light source 11 L is switched in accordance with the operation performed on the beam switch 15B.

The flasher switch 15F is connected to the flashers 14L and 14R. When the rider operates the flasher switch 15F, one of the flashers 14L and 14R is caused to flash in accordance with the operation performed on the flasher switch 15F.

In the motorcycle 10, a lean angle sensor 22 and a vehicle speed sensor 23 are provided. In this embodiment, the lean angle sensor 22 is a gyro sensor that detects the angular velocity about an axis in the front-back direction of the motorcycle 10. The lean angle sensor 22 supplies, to a controller 20, a signal indicating the detected angular velocity (roll rate) about the axis in the front-back direction. The vehicle speed sensor 23 detects the vehicle speed, and supplies, to the controller 20, a signal indicating the detected vehicle speed. Each time a predetermined timing comes during running, the controller 20 calculates the lean angle of the motorcycle 10 based on the angular velocity about the axis in the front-back direction and the vehicle speed.

In this embodiment, the roll rate is integrated over time, and the vehicle speed is used as correction information, thereby calculating the lean angle. However, according to the present teaching, a method for calculating the lean angle is not limited to this example. In the calculation of the lean angle, the vehicle speed is not an essential variable. For calculating the lean angle, a conventionally known method is adoptable. For example, the calculation may be performed based on a static equilibrium equation by using the yaw rate (angular velocity about an axis in the vertical direction) and the vehicle speed. The correction information is not limited to the vehicle speed. For example, it may be acceptable to provide a plurality of gyro sensors and G sensors and use values obtained from these sensors and the vehicle speed as the correction information. Instead of the vehicle speed, GPS position information and/or geomagnetic information may be used as the correction information. No particular limitation is put on sensors (detection part) for detecting variables that are available for obtaining the lean angle. An appropriate sensor may be provided in accordance with variables available for the calculation.

The controller 20 includes a memory (not shown).

The memory stores, in the form of data, a plurality of reference values $K(°)$ to be compared with the lean angle. In this embodiment, the memory stores three reference values (a first reference value $K_1$, a second reference value $K_2$, and a third reference value $K_3$). The first reference value $K_1$, the second reference value $K_2$, and the third reference value $K_3$ satisfy the relationship of "first reference value $K_1$ < second reference value $K_2$ < third reference value $K_3$".

The memory stores, in the form of data, lower values $T(°)$ to be compared with the lean angle. The lower value corresponds to the lean angle obtained when a light source that has been turned off is starting to light up in the course of an increase in the lean angle.

In this embodiment, the memory stores three lower values (a first lower value $T_1$, a second lower value $T_2$, and a third lower value $T_3$). The first lower value $T_1$, the second lower value $T_2$, and the third lower value $T_3$ satisfy the

relationship of "first lower value $T_1$ < second lower value $T_2$ < third lower value $T_3$". Each of the lower values T is smaller than each corresponding reference value K. To be specific, the relationship of "first lower value $T_1$ < first reference value $K_1$" is satisfied.

The memory stores, in the form of data, upper values U(°) to be compared with the lean angle. The upper value corresponds to the lean angle obtained when a light source is starting to light up with the highest brightness in the course of an increase in the lean angle.

In this embodiment, the memory stores three upper values (a first upper value $U_1$, a second upper value $U_2$, and a third upper value $U_3$). The first upper value $U_1$, the second upper value $U_2$, and the third upper value $U_3$ satisfy the relationship of "first upper value $U_1$ < second upper value $U_2$ < third upper value $U_3$". Each of the upper values U is greater than each corresponding reference value K. To be specific, the relationship of "first reference value $K_1$ < first upper value $U_1$" is satisfied.

The memory stores, in the form of data, specific values I(°) to be compared with the lean angle. The specific value corresponds to the lean angle obtained when a light source that has lighted up with the highest brightness is starting to dim in the course of an increase in the lean angle.

In this embodiment, the memory stores two specific values (a first specific value $I_1$ and a second specific value $I_2$). The first specific value $I_1$ and the second specific value $I_2$ satisfy the relationship of "first specific value $I_1$ < second specific value $I_2$". Each of the specific values I is greater than each corresponding upper value U. To be specific, the relationship of "first upper value $U_1$ < first specific value $I_1$" is satisfied.

The memory stores, in the form of data, defined values J(°) to be compared with the lean angle. The defined value corresponds to the lean angle obtained when the lowest brightness is achieved in the course of an increase in the lean angle beyond the specific value. While the lean angle is equal to or greater than the defined value, the state (brightness) obtained when the lean angle takes the defined value is maintained.

In this embodiment, the memory stores two defined values (a first defined value $J_1$ and a second defined value $J_2$). The first defined value $J_1$ and the second defined value $J_2$ satisfy the relationship of "first defined value $J_1$ < second defined value $J_2$". Each of the defined values J is greater than each corresponding specific value I. To be specific, the relationship of "first specific value $I_1$ < first defined value $J_1$" is satisfied.

The first reference value $K_1$, the first lower value $T_1$, the first upper value $U_1$, the first specific value $I_1$, and the first defined value $J_1$ are associated with the sub headlight light sources 13La and 13Ra.

The second reference value $K_2$, the second lower value $T_2$, the second upper value $U_2$, the second specific value $I_2$, and the second defined value $J_2$ are associated with the sub headlight light sources 13Lb and 13Rb.

The third reference value $K_3$, the third lower value $T_3$, and the third upper value $U_3$ are associated with the sub headlight light sources 13Lc and 13Rc. The sub headlight light sources 13Lc and 13Rc, with which the greatest reference value is associated, have no specific value and no defined value associated therewith.

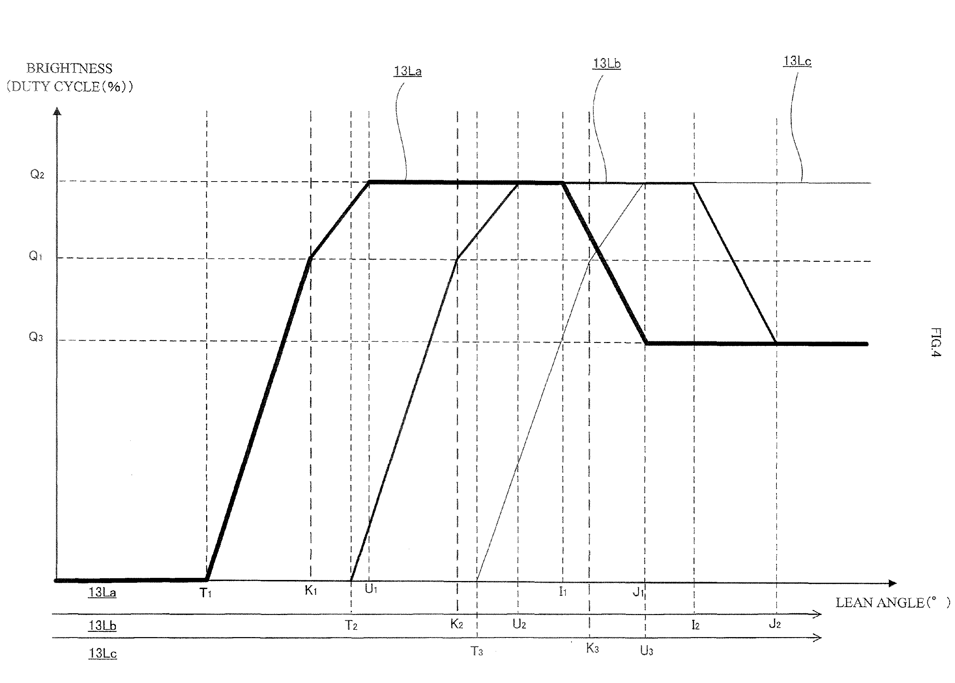

The relationship between each variable and the brightness of the sub headlight light source will be detailed later with reference to FIG. 4.

An answerback main unit 21 is connected to the controller 20. The answerback main unit 21 receives a signal radio wave from a remote control key 25.

The sub headlight light sources 13La to 13Lc, 13Ra to 13Rc are connected to the controller 20. A power source 26 is connected to the high beam light source 11 H and the low beam light source 11 L via the beam switch 15B. The power source 26 is connected to the flashers 14L and 14R via the flasher switch 15F. The power source 26 is connected to the controller 20.

The controller 20 controls the brightnesses of the sub headlight light sources 13La to 13Lc, 13Ra to 13Rc. In this embodiment, the sub headlight light sources 13La to 13Lc, 13Ra to 13Rc are configured of LEDs. The controller 20 performs a pulse width modulation control (PWM control) to adjust the duty cycle, and thereby the brightnesses are controlled (dimming control).

A method for performing the dimming control on the sub headlight light source is not particularly limited. For example, it may be conceivable to control a current to be supplied to the sub headlight light source, or to control a voltage to be supplied to the sub headlight light source.

Alternatively, a single sub headlight light source may include a plurality of light sources having different brightnesses. In this case, the dimming control on the sub headlight light source can be implemented by switching which of the light sources is turned on. For example, in a case where a single sub headlight light source includes two light sources having different brightnesses, the brightness of the light source can be controlled by switching the turned-on light source from the light source configured to light up with a first brightness to the light source configured to light up with a second brightness.

Furthermore, a single sub headlight light source may include a plurality of light sources. In this case, the dimming control on the sub headlight light source can be implemented by changing the number or combination of light sources that are turned on. The brightnesses of the plurality of light sources may be either different or the same. For example, in a case where a single sub headlight light source includes a plurality of light sources (for example, four light sources) having the same brightness, turning on part of the plurality of light sources enables the sub headlight light source to light up with the first brightness, while turning on all the plurality of light sources enables the sub headlight light source to light up with the second brightness.

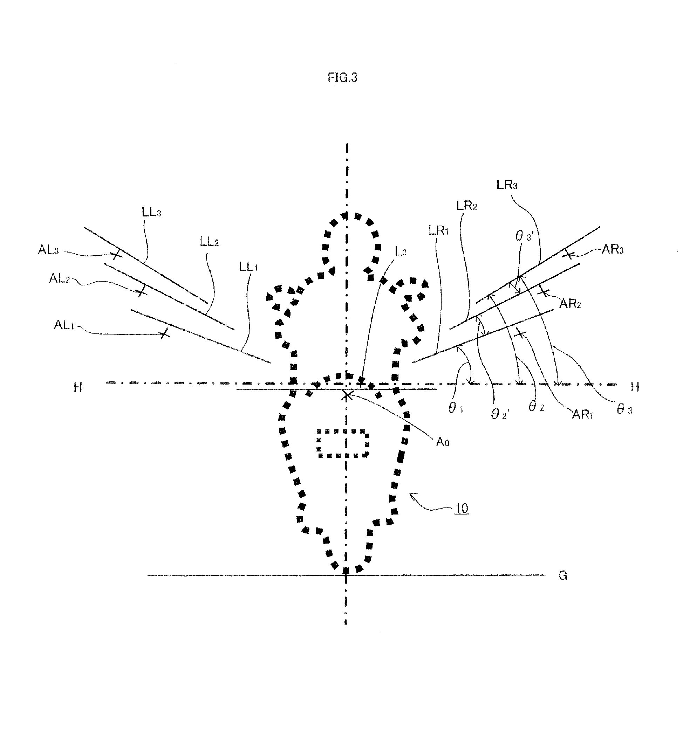

FIG. 3 is a front elevational view schematically showing optical axes and cut-off lines of the sub headlight light sources 13La to 13Lc, 13Ra to 13Rc of the motorcycle 10 in an upright state.

The motorcycle 10 stands upright on a flat ground G. An optical axis $A_0$ of the low beam light source 11 L is located below a horizon H of the low beam light source 11 L. A cut-off line $L_0$ of the low beam light source 11 L is located above the optical axis $A_0$, and located below the horizon H of the low beam light source 11 L. The cut-off line $L_0$ extends right and left along the width direction of the vehicle. An illumination range of the low beam light source 11 L covers both of the right and left sides with respect to the width direction of the vehicle.

The optical axes $AL_1$ to $AL_3$ of the sub headlight light sources 13La to 13Lc are located outward in the order of the optical axes $AL_1$ to $AL_3$ with respect to the width direction of the vehicle. The optical axes $AL_1$ to $AL_3$ of the sub headlight light sources 13La to 13Lc are located above the optical axis $A_0$ of the low beam light source 11 L.

Inclination angles $\theta_1$ to $\theta_3$ of cut-off lines $LL_1$ to $LL_3$ of the sub headlight light sources 13La to 13Lc increase in the order of the inclination angles $\theta_1$ to $\theta_3$.

The inclination angles $\theta_1$ to $\theta_3$ of the cut-off lines $LL_1$ to $LL_3$ of the sub headlight light sources 13La to 13Lc are set to be values increasing at intervals from 0° to $\theta_1$, $\theta_2$, and $\theta_3$ in this order. The interval between 0° and $\theta_1$ is $\theta_1$. When the interval between $\theta_2$ and $\theta_1$ is defined as $\theta_2'$ and the interval between $\theta_3$ and $\theta_2$ is defined as $\theta_3'$, the intervals $\theta_1$, $\theta_2'$, and $\theta_3'$ satisfy $\theta_1 > \theta_2' > \theta_3'$. In other words, a larger inclination angle ($\theta_1$ to $\theta_3$) has a smaller interval ($\theta_1$, $\theta_2'$, $\theta_3'$). Here, according to the present teaching, the relationship among the inclination angles ($\theta_1$ to $\theta_3$) is not limited to this example. The intervals ($\theta_1$, $\theta_2'$, $\theta_3'$) may be regular intervals, that is, the relationship of $\theta_1 = \theta_2' = \theta_3'$ may be established.

No particular limitation is put on the relationship between the inclination angle ($\theta_1$ to $\theta_3$) of the cut-off line ($LL_1$ to $LL_3$) of each sub headlight light source (13La to 13Lc) and the reference value ($K_1$ to $K_3$) set for the sub headlight light source (13La to 13Lc). These values (angles) may be either different or the same. A state where these values are the same includes a state where these values are substantially the same.

The cut-off lines $LL_1$ to $LL_3$ of the sub headlight light sources 13La to 13Lc define the upper end edges of the illumination ranges of the sub headlight light sources 13La to 13Lc, respectively, though not shown in FIG. 3. Therefore, the illumination ranges of the sub headlight light sources 13La to 13Lc are located below the cut-off lines $LL_1$ to $LL_3$ of the sub headlight light sources 13La to 13Lc. Accordingly, each of the illumination ranges of the sub headlight light sources 13La to 13Lc includes a space above the horizon H, and their locations are higher in ascending order of the illumination range of the sub headlight light source 13La, the illumination range of the sub headlight light source 13Lb, and the illumination range of the sub headlight light source 13Lc. The illumination ranges of the sub headlight 13La to 13Lc are located at the left side with respect to the width direction of the vehicle.

Except for whether the sub headlight light sources are provided at the right side or the left side of the symmetry, the sub headlight light sources 13Ra to 13Rc are identical to the sub headlight light sources 13La to 13Lc described above. Therefore, a description thereof will be omitted.

Next, a change in the brightness of the sub headlight 13 in accordance with an increase in the lean angle will be described with reference to FIG. 4.

FIG. 4 is a chart showing the relationship between the lean angle of the motorcycle 10 and the brightnesses of the sub headlight light sources 13La to 13Lc according to the first preferred embodiment. Among brightnesses $Q_1$ to $Q_3$ of the sub headlight light sources 13La to 13Lc, $Q_1$ represents a first brightness, $Q_2$ represents a second brightness, and $Q_3$ represents a third brightness. The brightnesses $Q_1$ to $Q_3$ of the sub headlight light sources 13La to 13Lc satisfy the relationship of $Q_3 < Q_1 < Q_2$.

[Lean Angle = 0°]

When the lean angle is 0°, each of the light sources of the sub headlight 13 is in the following state.

The sub headlight light source 13La is not turned on.

The sub headlight light source 13Lb is not turned on.

The sub headlight light source 13Lc is not turned on.

[0° < Lean Angle(°) < First Reference Value $K_1$]

In the course of an increase in the lean angle from 0°, each of the light sources of the sub headlight 13 is as follows.

The sub headlight light source 13La starts to light up when the lean angle reaches the first lower value $T_1$ that is set for the sub headlight light source 13La. When the lean angle is in the range from the first lower value $T_1$ to the first reference value $K_1$, the brightness of the sub headlight light source 13La continuously increases along with the increase in the lean angle. That is, when the lean angle is in the range from the first lower value $T_1$ to the first reference

value $K_1$, the sub headlight light source 13La lights up with a brightness lower than the first brightness $Q_1$.

The sub headlight light source 13Lb is not turned on.

The sub headlight light source 13Lc is not turned on.

[Lean Angle(°) = First Reference Value $K_1$]

When the lean angle reaches the reference value $K_1$ that is set for the sub headlight light source 13La, each of the light sources of the sub headlight 13 is in the following state.

The sub headlight light source 13La lights up with the first brightness $Q_1$.

The sub headlight light source 13Lb is not turned on.

The sub headlight light source 13Lc is not turned on.

[First Reference Value $K_1$ < Lean Angle(°) < Second Reference Value $K_2$]

In the course of an increase in the lean angle from the first reference value $K_1$, each of the light sources of the sub headlight 13 is as follows.

The brightness of the sub headlight light source 13La continuously increases along with the increase in the lean angle until the lean angle reaches the first upper value $U_1$. When the lean angle reaches the first upper value $U_1$, the sub headlight light source 13La lights up with the second brightness $Q_2$. When the lean angle is in the range from the first upper value $U_1$ to the first specific value $I_1$, the sub headlight light source 13La lights up with the second brightness $Q_2$,

The sub headlight light source 13Lb starts to light up when the lean angle reaches the second lower value $T_2$ that is set for the sub headlight light source 13Lb. When the lean angle is in the range from the second lower value $T_2$ to the second reference value $K_2$, the brightness of the sub headlight light source 13Lb continuously increases along with the increase in the lean angle.

The sub headlight light source 13Lc is not turned on.

[Lean Angle(°) = Second Reference Value $K_2$]

When the lean angle reaches the reference value $K_2$ that is set for the sub headlight light source 13Lb, each of the light sources of the sub headlight 13 is in the following state.

The sub headlight light source 13La lights up with the brightness $Q_2$.

The sub headlight light source 13Lb lights up with the brightness $Q_1$.

The sub headlight light source 13Lc is not turned on.

[Second Reference Value $K_2$ < Lean Angle(°) < Third Reference Value $K_3$]

In the course of an increase in the lean angle from the second reference value $K_2$, each of the light sources of the sub headlight 13 is as follows.

The sub headlight light source 13La lights up with the second brightness $Q_2$ until the lean angle reaches the first specific value $I_1$. After the lean angle reaches the first specific value $I_1$, the brightness of the sub headlight light source 13La continuously decreases along with the increase in the lean angle.

The brightness of the sub headlight light source 13Lb continuously increases along with the increase in the lean angle when the lean angle is in the range from the second reference value $K_2$ to the second upper value $U_2$. When the lean angle reaches the second upper value $U_2$, the sub headlight light source 13Lb lights up with the second brightness $Q_2$.

The sub headlight light source 13Lc starts to light up when the lean angle reaches the third lower value $T_3$ that is set for the sub headlight light source 13Lc. When the lean angle is in the range from the third lower value $T_3$ to the third reference value $K_3$, the brightness of the sub headlight light source 13Lc continuously increases along with the increase in the lean angle.

[Lean Angle(°) = Third Reference Value $K_3$]

When the lean angle reaches the reference value $K_3$ that is set for the sub headlight light source 13Lc, each of the light sources of the sub headlight 13 is in the following state.

The sub headlight light source 13La lights up with a brightness lower than the second brightness $Q_2$ and higher than the third brightness $Q_3$.

The sub headlight light source 13Lb lights up with the second brightness $Q_2$.

The sub headlight light source 13Lc lights up with the first brightness $Q_1$.

[Third Reference Value $K_3$ < Lean Angle(°)]

In the course of an increase in the lean angle from the reference value $K_3$, each of the light sources of the sub headlight 13 is as follows.

The brightness of the sub headlight light source 13La continuously decreases along with the increase in the lean angle until the lean angle reaches the first defined value $J_1$. When the lean angle is equal to or greater than the first defined value $J_1$, the sub headlight light source 13La lights up with the brightness $Q_3$.

The sub headlight light source 13Lb lights up with the second brightness $Q_2$ until the lean angle reaches the second specific value $I_2$. After the lean angle reaches the second specific value $I_2$, the brightness of the sub headlight light source 13Lb continuously decreases along with the increase in the lean angle. When the lean angle is equal to or greater than the second defined value $J_2$, the sub headlight light source 13Lb lights up with the brightness $Q_3$.

The sub headlight light source 13Lc lights up with the brightness $Q_2$ when the lean angle is equal to or greater than the upper value $U_3$.

The brightnesses of the sub headlight light sources 13La to 13Lc are changed in accordance with the lean angle, as follows.

When the lean angle is equal to or greater than 0° and less than the lower value $T_1$ to $T_3$ that is set for the sub headlight light source 13La to 13Lc, the corresponding sub headlight light source 13La to 13Lc is turned off.

When the lean angle is equal to or greater than the lower value $T_1$ to $T_3$ that is set for the sub headlight light source 13La to 13Lc and less than the reference value $K_1$ to $K_3$ that is set for the sub headlight light source 13La to 13Lc, the corresponding sub headlight light source 13La to 13Lc lights up with a brightness lower than the first brightness $Q_1$. When the lean angle is equal to or greater than the lower value $T_1$ to $T_3$ and less than the reference value $K_1$ to $K_3$, the brightness of the corresponding sub headlight light source 13La to 13Lc continuously increases along with an increase in the lean angle, and the brightness of the corresponding sub headlight light source 13La to 13Lc continuously decreases along with a decrease in the lean angle.

When the lean angle takes the reference value $K_1$ to $K_3$, the corresponding sub headlight light source 13La to 13Lc lights up with the first brightness $Q_1$.

When the lean angle is greater than the reference value $K_1$ to $K_3$ and less than the upper value $U_1$ to $U_3$, the corresponding sub headlight light source 13La to 13Lc lights up with a brightness higher than the first brightness $Q_1$ and lower than the second brightness $Q_2$. When the lean angle is greater than the reference value $K_1$ to $K_3$ and less than the upper value $U_1$ to $U_3$, the brightness of the corresponding sub headlight light source 13La to 13Lc continuously increases along with an increase in the lean angle, and the brightness of the corresponding sub headlight light source 13La to 13Lc continuously decreases along with a decrease in the lean angle.

When the lean angle takes the upper value $U_1$ to $U_3$, the corresponding sub headlight light source 13La to 13Lc lights up with the second brightness $Q_2$.

In this embodiment, when the lean angle is equal to or greater than the lower value $T_1$ to $T_3$ that is set for the sub headlight light source 13La to 13Lc and less than the reference value $K_1$ to $K_3$ that is set for the sub headlight light source 13La to 13Lc, the brightness of the corresponding sub headlight light sources 13La to 13Lc continuously increases along with an increase in the lean angle. However, the present teaching is not limited to this example. According to the present teaching, it suffices that, when the lean angle takes the lower value $T_1$ to $T_3$, the corresponding sub headlight light source 13La to 13Lc lights up with a brightness lower than the first brightness $Q_1$. Therefore, the corresponding sub headlight light source 13La to 13Lc may light up with a predetermined brightness lower than the first brightness $Q_1$. However, when the lean angle is equal to or greater than the lower value $T_1$ to $T_3$ that is set for the sub headlight light source 13La to 13Lc and less than the reference value $K_1$ to $K_3$ that is set for the sub headlight light source 13La to 13Lc, continuously increasing the brightness of the sub headlight light source 13La to 13Lc in accordance with an increase in the lean angle causes the brightness of the sub headlight light source 13La to 13Lc to gradually increase. This can suppress occurrence of a situation where the corresponding headlight light source 13La to 13Lc suddenly lights up with a high brightness to make the rider feel uncomfortable.

In this embodiment, the specific value and the defined value are not set for the sub headlight light source 13Lc having the greatest reference value set therefor among the plurality of sub headlight light sources 13La to 13Lc. Thus, even when the lean angle increases beyond the upper value $U_3$, the sub headlight light source 13Lc having the greatest reference value set therefor keeps lighting up with the second brightness $Q_2$.

On the other hand, for the sub headlight light sources 13La and 13Lb having the reference values smaller than the greatest reference value set therefor, the specific values $I_1$ and $I_2$ and the defined values $J_1$ and $J_2$ are set, respectively.

When the lean angle is greater than the upper value $U_1$, $U_2$ and equal to or less than the specific value $I_1$, $I_2$, the corresponding sub headlight light source 13La, 13Lb having the reference value smaller than the greatest reference value set therefor lights up with the second brightness $Q_2$. When the lean angle is greater than the specific value $I_1$, $I_2$

and less than the defined value $J_1$, $J_2$, the corresponding sub headlight light source 13La, 13Lb having the reference value smaller than the greatest reference value set therefor lights up with a brightness lower than the second brightness $Q_2$ and higher than the third brightness $Q_3$. When the lean angle is greater than the specific value $I_1$, $I_2$ and less than the defined value $J_1$, $J_2$, the brightness of the corresponding sub headlight light source 13La, 13Lb having the reference value smaller than the greatest reference value set therefor continuously decreases along with an increase in the lean angle, and the brightness of the corresponding sub headlight light source 13La, 13Lb having the reference value smaller than the greatest reference value set therefor continuously increases along with a decrease in the lean angle. When the lean angle is equal to or greater than the defined value $J_1$, $J_2$, the corresponding sub headlight light source 13La, 13Lb lights up with the third brightness $Q_3$.

This embodiment describes a case where the specific value and the defined value are not set for one sub headlight light source 13Lc having the greatest reference value set therefor. However, the present teaching is not limited to this example. It may be acceptable that the specific values and the defined values are set for all the sub headlight light sources 13La to 13Lc.

In FIG. 4, the duty cycle of a voltage supplied to the sub headlight light source is adopted as an index of the brightness of the sub headlight light source. However, according to the present teaching, the index of the brightness of the sub headlight light source is not limited to this example. Examples of the index include a supplied voltage, a supplied current, an illuminance obtained at a position at a predetermined distance from the light source, and a luminance of the light source. When any index is adopted, the above-described magnitude relationship ($Q_3 < Q_1 < Q_2$) among the brightnesses of the sub headlight light source is established. The brightnesses $Q_1$, $Q_2$, and $Q_3$ are not particularly limited, and appropriately set as needed. In this embodiment, the sub headlight light sources 13La to 13Lc and the sub headlight light source 13Ra to 13Rc adopt the same brightnesses $Q_1$, $Q_2$, and $Q_3$. However, the present teaching is not limited to this example, and appropriate setting is made as needed.

Next, a change in a screen light distribution of the headlight in accordance with the lean angle of the motorcycle 10 will be described with reference to FIGS. 5 to 7.

FIG. 5(a) is a diagram schematically showing a screen light distribution obtained when the lean angle of the motorcycle 10 takes a value that is in the range from the lower value $T_1$ to the reference value $K_1$ and is relatively close to the lower value $T_1$

An illumination range LB of the low beam light source 11 L is located ahead in front of the motorcycle 10. An illumination range $SH_1$ of the sub headlight light source 13La is located above a left portion of the illumination range LB. The cut-off line $LL_1$ of the sub headlight light source 13La is located above the horizon H. Here, the sub headlight light source 13La lights up with a brightness lower than the brightness $Q_1$ (FIG. 4).

FIG. 5(b) is a diagram schematically showing a screen light distribution obtained when the lean angle of the motorcycle 10 takes a value that is in the range from the lower value $T_1$ to the reference value $K_1$ and is greater than the lean angle shown in FIG. 5(a).

In FIG. 5(b), the illumination ranges LB and $SH_1$ tilt toward the lower left as compared with FIG. 5(a). The cut-off line $LL_1$ of the sub headlight light source 13La is adjacent to the horizon H at a location above the horizon H. Here, the sub headlight light source 13La lights up with a brightness lower than the brightness $Q_1$ and higher than the brightness in the state shown in FIG. 5(a) (FIG. 4).

FIG. 5(c) is a diagram schematically showing a screen light distribution obtained when the lean angle of the motorcycle 10 takes the reference value $K_1$.

In FIG. 5(c), the illumination ranges LB and $SH_1$ tilt toward the lower left as compared with FIG. 5(b). The cut-off line $LL_1$ of the sub headlight light source 13La is located below the horizon H. The illumination range $SH_1$ of the sub headlight light source 13La is located in a space below the horizon H. Here, the sub headlight light source 13La lights up with the brightness $Q_1$ (FIG. 4).

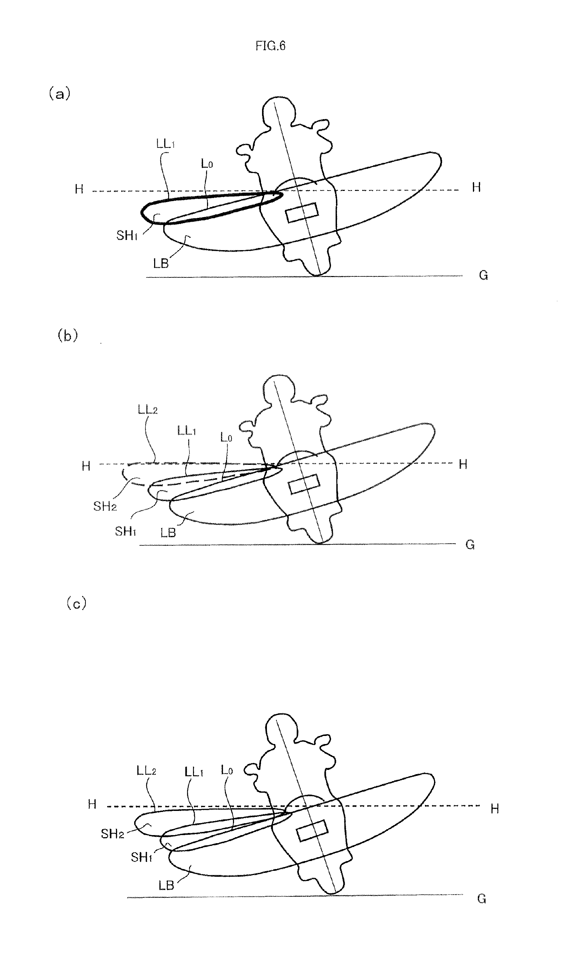

FIG. 6(a) is a diagram schematically showing a screen light distribution obtained when the lean angle of the motorcycle 10 takes the upper value $U_1$.

In FIG. 6(a), the illumination ranges LB and $SH_1$ tilt toward the lower left as compared with FIG. 5(c). The cut-off line $LL_1$ of the sub headlight light source 13La is located below the horizon H while tilting toward the lower left. Here, the sub headlight light source 13La lights up with the brightness $Q_2$ (FIG. 4).

The cut-off line $LL_1$ obtained when the lean angle takes the reference value $K_1$ (FIG. 5(c)) is closer to horizontal than the cut-off line $LL_1$ obtained when the lean angle takes the upper value $U_1$ (FIG. 6(a)) and the cut-off line $LL_1$ obtained when the motorcycle 10 is in the upright state (FIG. 3). The same applies to the cut-off lines $LL_2$ and $LL_3$, too, though not shown.

FIG. 6(b) is a diagram schematically showing a screen light distribution obtained when the lean angle of the motorcycle 10 takes a value that is in the range from the lower value $T_2$ to the reference value $K_2$.

In FIG. 6(b), the illumination ranges LB and $SH_1$ tilt toward the lower left as compared with FIG. 6(a). An illumination range $SH_2$ of the sub headlight light source 13Lb is located above the illumination range $SH_1$. The cut-off line $LL_2$ of the sub headlight light source 13Lb is adjacent to the horizon H at a location above the horizon H. Here, the sub headlight light source 13Lb lights up with a brightness lower than the brightness $Q_1$ (FIG. 4).

FIG. 6(c) is a diagram schematically showing a screen light distribution obtained when the lean angle of the motorcycle 10 takes the reference value $K_2$.

In FIG. 6(c), the illumination ranges LB, $SH_1$, and $SH_2$ tilt toward the lower left as compared with FIG. 6(b). The cut-off line $LL_2$ of the sub headlight light source 13Lb is located below the horizon H. The illumination range $SH_2$ of the sub headlight light source 13Lb is located in a space below the horizon H. Here, the sub headlight light source 13Lb lights up with the brightness $Q_1$ (FIG. 4).

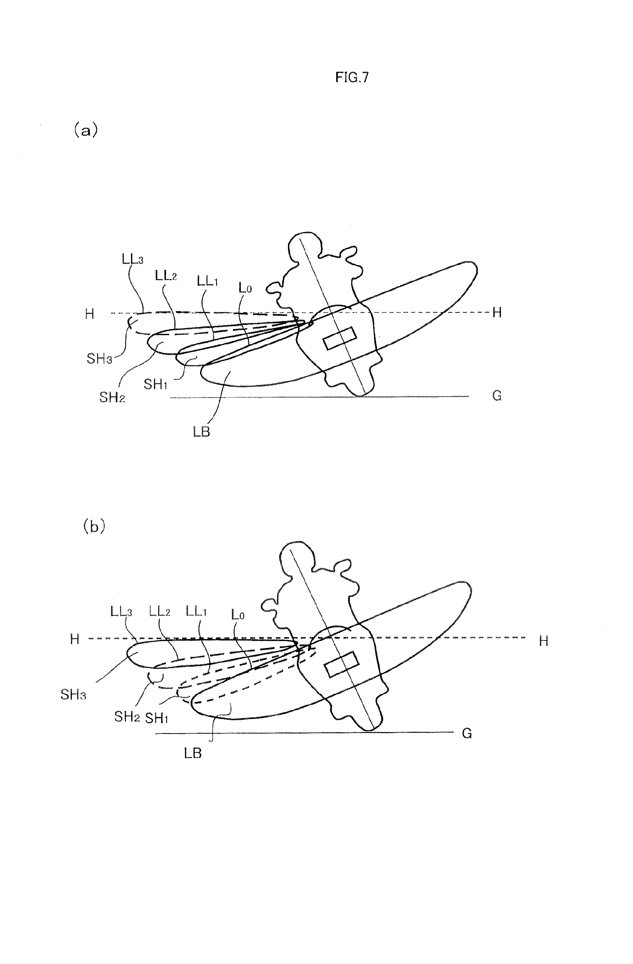

FIG. 7(a) is a diagram schematically showing a screen light distribution obtained when the lean angle of the motorcycle 10 takes a value that is in the range from the lower value $T_3$ to the reference value $K_3$.

In FIG. 7(a), the illumination ranges LB, $SH_1$, and $SH_2$ tilt toward the lower left as compared with FIG. 6(c). An illumination range $SH_3$ of the sub headlight light source 13Lc is located above the illumination range $SH_2$. The cut-off line $LL_3$ of the sub headlight light source 13Lc is adjacent to the horizon H at a location above the horizon H. Here, the sub headlight light source 13Lc lights up with a brightness lower than the brightness $Q_1$ (FIG. 4).

FIG. 7(b) is a diagram schematically showing a screen light distribution obtained when the lean angle of the motorcycle 10 takes the reference value $K_3$.

In FIG. 7(b), the illumination ranges LB, $SH_1$ to $SH_3$ tilt toward the lower left as compared with FIG. 7(a). The cut-off line $LL_3$ of the sub headlight light source 13Lc is located below the horizon H. The illumination range $SH_3$ of the sub headlight light source 13Lc is located in a space below the horizon H. Here, the sub headlight light source 13Lc lights up with the brightness $Q_2$ (FIG. 4).

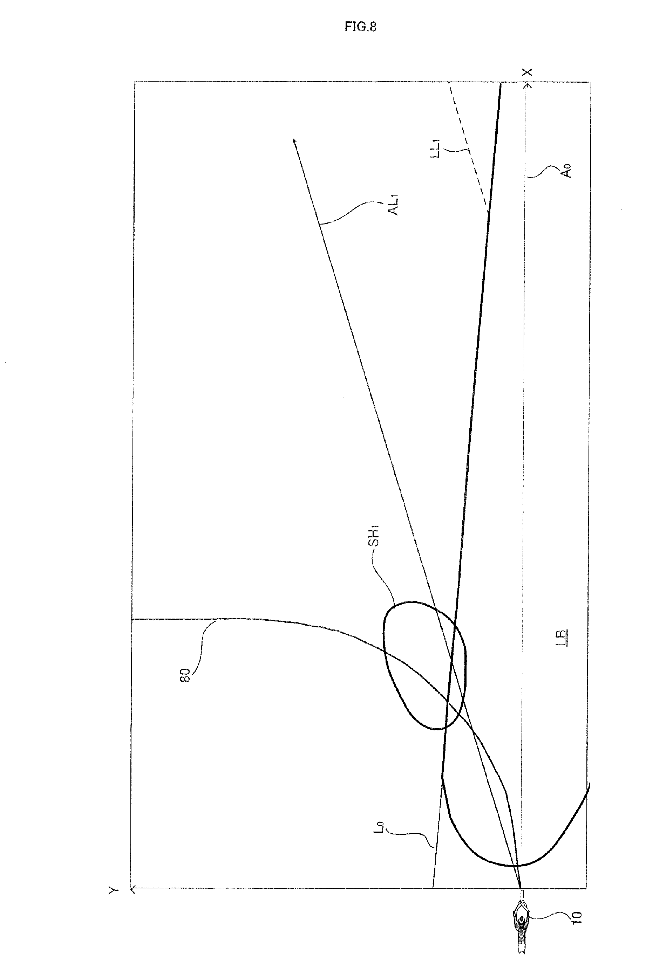

Next, a change in an illumination range of the headlight in accordance with the lean angle of the motorcycle 10 will be described with reference to FIGS. 8 to 17. In FIGS. 8 to 17, X represents a straight ahead direction of the motorcycle 10 that leans into turns, and Y represents the left side with respect to the width direction of the motorcycle 10. The reference numeral 80 denotes a path of the motorcycle 10. The path 80 curves to the left, with a predetermined radius.

FIG. 8 illustrates a light distribution, schematically showing an illumination range of the headlight produced on a road surface at a time when the lean angle of the motorcycle 10 takes a value that is in the range from the lower value $T_1$ to the reference value $K_1$ and is relatively close to the lower value $T_1$.

The illumination range LB of the low beam light source 11 L having an illuminance $L_1$ spreads ahead of the motorcycle 10 along the advancing direction X. Since the motorcycle 10 is inclined to the left, the cut-off line $L_0$ of the low beam light source 11 L approaches to the motorcycle 10 from the left side of the motorcycle 10. Accordingly, on the path 80, only a region relatively close to the motorcycle 10 is covered by the illumination range having the illuminance $L_1$.

In running, the rider normally looks at a position on the path 80 ahead of the motorcycle 10. Therefore, the cut-off line $L_0$ approaching to the motorcycle 10 enters the rider's field of view.

On the other hand, the sub headlight light source 13La produces illumination along the optical axis $AL_1$. Therefore, on the path 80, the illumination range $SH_1$ of the sub headlight light source 13La covers the cut-off line $L_0$ of the low beam light source 11 L. Accordingly, the movement of the cut-off line $L_0$ of the low beam light source 11 L within the rider's field of view is less likely to be conspicuous. Moreover, the cut-off line $LL_1$ of the sub headlight light source 13La is located at a relatively farther position ahead of the motorcycle 10. In a state shown in FIG. 8, the cut-off line $LL_1$ is less clear than the cut-off line $L_0$.

Moreover, a region on the path 80 covered by the illumination range having the illuminance $L_1$ is elongated. The illumination range $SH_1$ of the sub headlight light source 13La spreads over a position the rider desires to see.

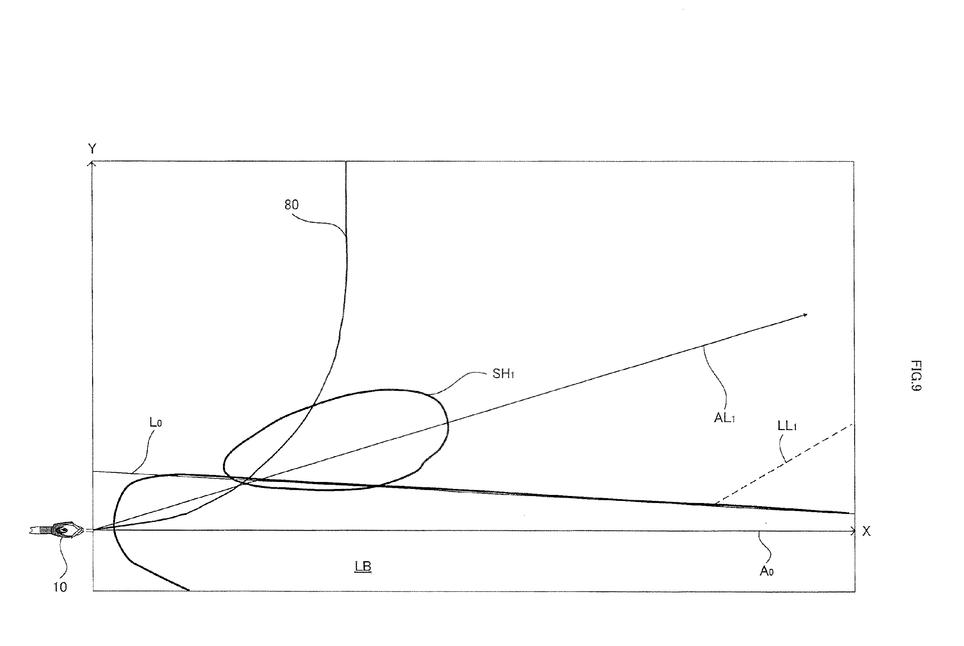

FIG. 9 illustrates a light distribution, schematically showing an illumination range of the headlight produced on a road surface at a time when the lean angle of the motorcycle 10 takes a value that is in the range from the lower value $T_1$ to the reference value $K_1$ and is greater than the lean angle shown in FIG. 8.

In a state shown in FIG. 9, the lean angle of the motorcycle 10 increases as compared with the state shown in FIG. 8. Therefore, the cut-off line $L_0$ of the low beam light source 11 L further approaches to the motorcycle 10 as compared with the state shown in FIG. 8. Accordingly, the region on the path 80 covered by the illumination range LB of the low beam light source 11 L having the illuminance $L_1$ is shortened.

On the other hand, the brightness of the sub headlight light source 13La increases in accordance with the increase in the lean angle, and therefore the illumination range $SH_1$ is enlarged. As a result, the illumination range $SH_1$ of the sub headlight light source 13La still covers the cut-off line $L_0$ of the low beam light source 11 L on the path 80. Accordingly, the movement of the cut-off line $L_0$ of the low beam light source 11 L within the rider's field of view is less likely to be conspicuous. Moreover, the cut-off line $LL_1$ of the sub headlight light source 13La is located at a relatively farther position ahead of the motorcycle 10. In the state shown in FIG. 9, the cut-off line $LL_1$ is less clear than the cut-off line $L_0$.

In the state shown in FIG. 9, the lean angle increases as compared with the state shown in FIG. 8, but the brightness of the sub headlight light source 13La increases so that a region on the path 80 covered by the illumination range having the illuminance $L_1$ is ensured to the same extent as in the state shown in FIG. 8. As a result, the illumination

range $SH_1$ of the sub headlight light source 13La spreads over the position the rider desires to see (on the path 80).

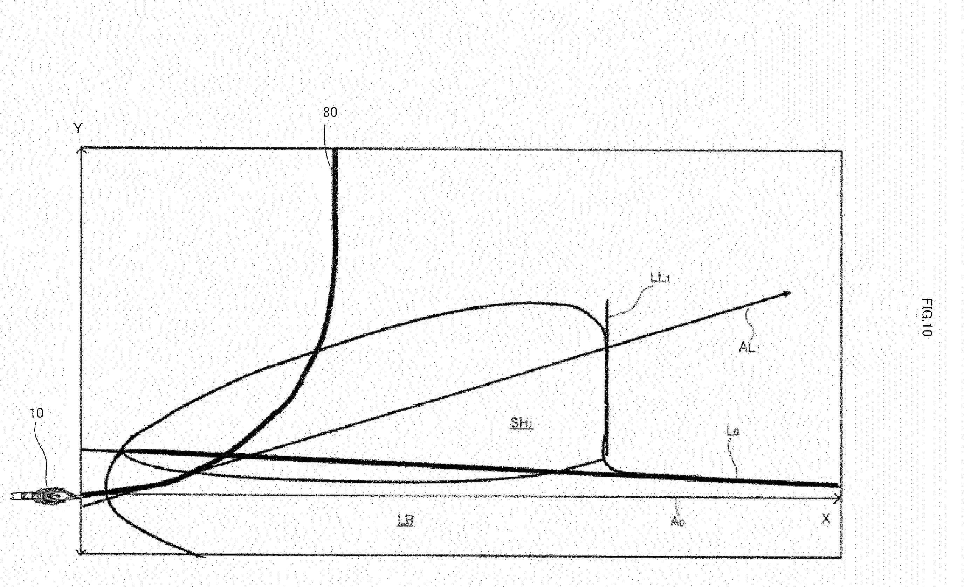

FIG. 10 illustrates a light distribution, schematically showing an illumination range of the headlight produced on a road surface at a time when the lean angle of the motorcycle 10 takes the reference value $K_1$.

In a state shown in FIG. 10, the lean angle of the motorcycle 10 increases as compared with the state shown in FIG. 9. Therefore, the cut-off line $L_0$ of the low beam light source 11 L further approaches to the motorcycle 10 as compared with the state shown in FIG. 9. Accordingly, the region on the path 80 covered by the illumination range LB of the low beam light source 11 L having the illuminance $L_1$ is further shortened.

On the other hand, the sub headlight light source 13La is lighting up with the first brightness $Q_1$, and the brightness of the sub headlight light source 13La increases in accordance with the increase in the lean angle. Therefore, the illumination range $SH_1$ is enlarged. As a result, the illumination range $SH_1$ of the sub headlight light source 13La still covers the cut-off line $L_0$ of the low beam light source 11 L on the path 80. Accordingly, the movement of the cut-off line $L_0$ of the low beam light source 11 L within the rider's field of view is less likely to be conspicuous.

In the state shown in FIG. 10, the lean angle increases as compared with the state shown in FIG. 9, but the brightness of the sub headlight light source 13La increases so that a region on the path 80 covered by the illumination range having the illuminance $L_1$ is ensured to the same extent as in the state shown in FIG. 9. As a result, the illumination range $SH_1$ of the sub headlight light source 13La spreads over the position the rider desires to see (on the path 80). The cut-off line $LL_1$ of the sub headlight light source 13La is located at the side (X side) of the illumination range $SH_1$ to which the motorcycle 10 is advancing. The cut-off line $LL_1$ extends right and left along the width direction of the vehicle (Y direction).

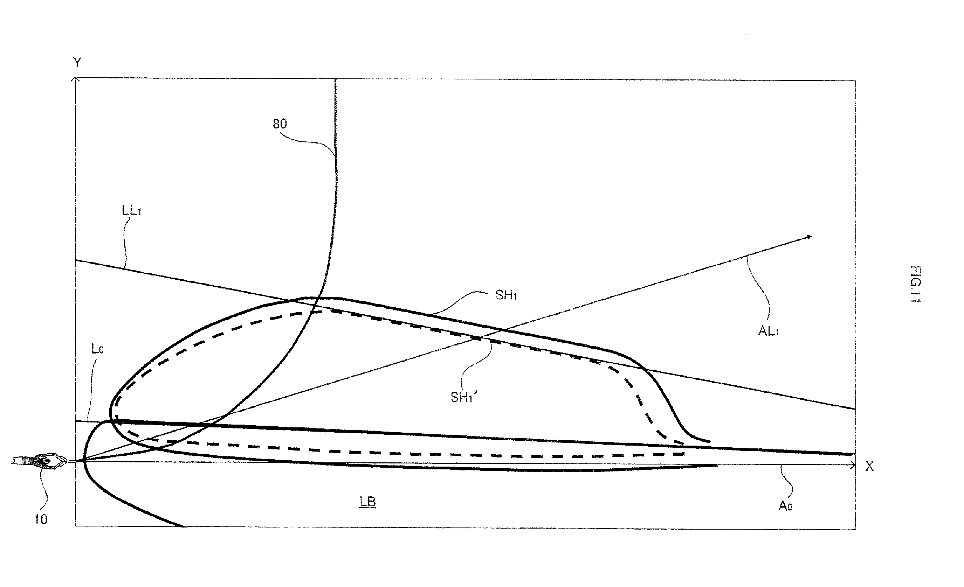

FIG. 11 illustrates a light distribution, schematically showing an illumination range of the headlight produced on a road surface at a time when the lean angle of the motorcycle 10 takes the upper value $U_1$. In this embodiment, the lower value $T_2$ is less than the upper value $U_1$. Therefore, when the lean angle of the motorcycle 10 takes the upper value $U_1$, the sub headlight light source 13Lb has already started to light up. However, the illumination range $SH_2$ of the sub headlight light source 13Lb is not shown in FIG. 11.

In a state shown in FIG. 11, the lean angle of the motorcycle 10 increases as compared with the state shown in FIG. 10. Therefore, the cut-off line $L_0$ of the low beam light source 11 L further approaches to the motorcycle 10 as compared with the state shown in FIG. 10. In addition, the cut-off line $LL_1$ of the sub headlight light source 13La also approaches to the motorcycle 10 from the left side of the motorcycle 10.

On the other hand, while the lean angle is increasing from the reference value $K_1$ to the upper value $U_1$, the brightness of the sub headlight light source 13La is increasing from the first brightness $Q_1$ to the second brightness $Q_2$. Therefore, the illumination range $SH_1$ of the sub headlight light source 13La is enlarged. In FIG. 11, a region $SH_1'$ enclosed by the broken line indicates an illumination range of the sub headlight light source 13La obtained when the sub headlight light source 13La lights up with the first brightness $Q_1$. The illumination range $SH_1$ of the sub headlight light source 13La is larger than the region $SH_1'$ enclosed by the broken line.

Thus, in the motorcycle 10, when the lean angle increases from the reference value $K_1$ to the upper value $U_1$, the cut-off line $LL_1$ of the sub headlight light source 13La approaches to the motorcycle 10 along with the increase in the lean angle, but the illumination range $SH_1$ is enlarged in accordance with the increase in the brightness of the sub headlight light source 13La from the first brightness $Q_1$ to the second brightness $Q_2$. Thereby, the speed of approach of the cut-off line $LL_1$ to the motorcycle 10 can be reduced.

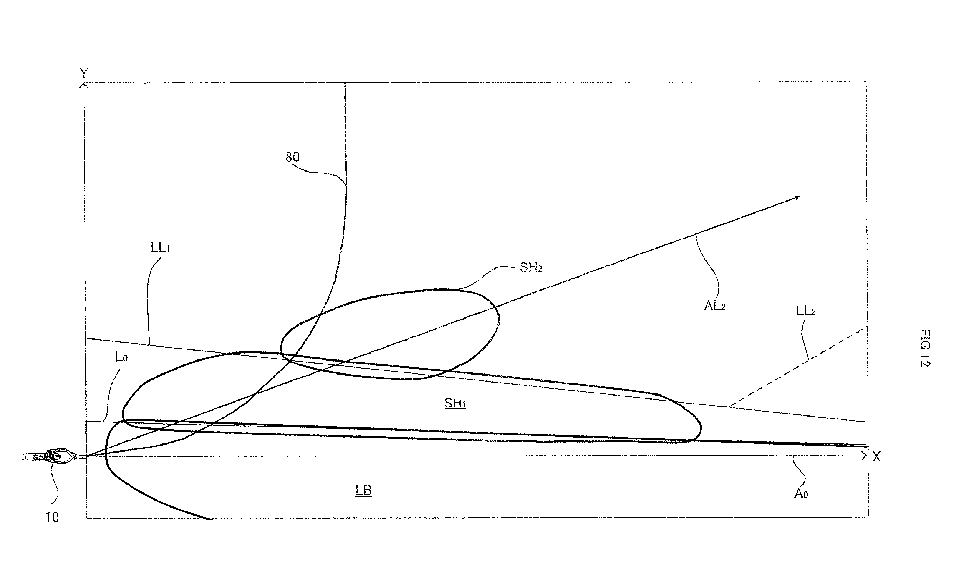

FIG. 12 illustrates a light distribution, schematically showing an illumination range of the headlight produced on a road surface at a time when the lean angle of the motorcycle 10 takes a value that is in the range from the lower value $T_2$ to the reference value $K_2$.

In a state shown in FIG. 12, the lean angle of the motorcycle 10 increases as compared with the state shown in FIG. 11. Therefore, the cut-off line $LL_1$ of the sub headlight light source 13La further approaches to the motorcycle 10 as compared with the state shown in FIG. 11. Accordingly, a region on the path 80 covered by the illumination ranges LB and $SH_1$ is shortened.

On the other hand, the sub headlight light source 13Lb produces illumination along the optical axis $AL_2$. Therefore, on the path 80, the illumination range $SH_2$ of the sub headlight light source 13Lb covers the cut-off line $LL_1$ of the sub headlight light source 13La. Accordingly, the movement of the cut-off line $LL_1$ of the sub headlight light source 13La within the rider's field of view is less likely to be conspicuous. Moreover, the cut-off line $LL_2$ of the sub headlight light source 13Lb is located at a relatively farther position ahead of the motorcycle 10. In the state shown in FIG. 12, the cut-off line $LL_2$ is less clear than the cut-off line $LL_1$.

Moreover, a region on the path 80 covered by the illumination range having the illuminance $L_1$ is elongated. The illumination range $SH_2$ of the sub headlight light source 13Lb spreads over the position the rider desires to see.

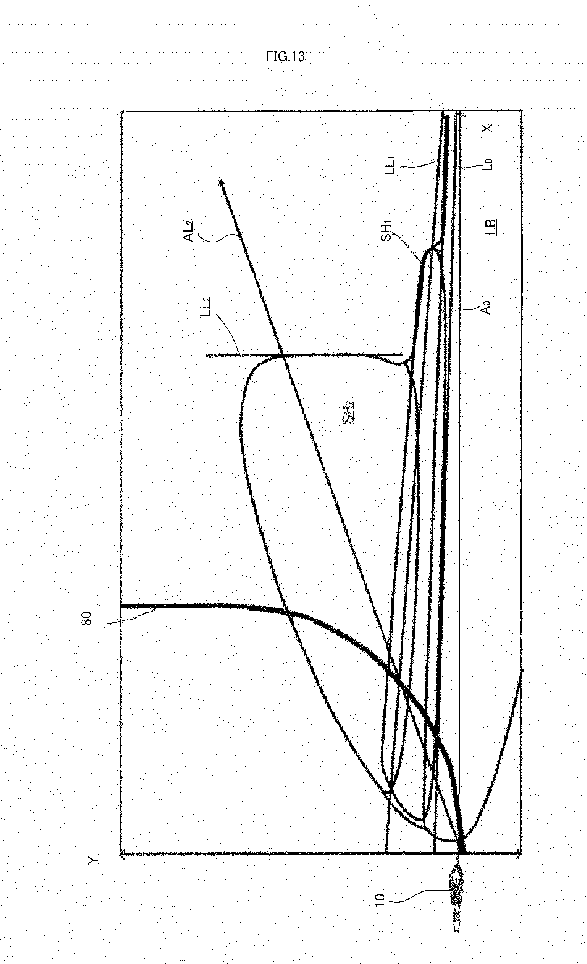

FIG. 13 illustrates a light distribution, schematically showing an illumination range of the headlight produced on a road surface at a time when the lean angle of the motorcycle 10 takes the reference value $K_2$.

In a state shown in FIG. 13, the lean angle of the motorcycle 10 increases as compared with the state shown in FIG. 12. Therefore, the cut-off line $LL_1$ of the sub headlight light source 13La further approaches to the motorcycle 10 as compared with the state shown in FIG. 12. Accordingly, the region covered by the illumination range $SH_1$ of the sub headlight light source 13La having the illuminance $L_1$ is further shortened.

On the other hand, the sub headlight light source 13Lb is lighting up with the first brightness $Q_1$, and the brightness of the sub headlight light source 13Lb increases along with the increase in the lean angle. Therefore, the illumination range $SH_2$ is enlarged. As a result, the illumination range $SH_2$ of the sub headlight light source 13Lb still covers the cut-off line $LL_1$ of the sub headlight light source 13La on the path 80. Accordingly, the movement of the cut-off line $LL_1$ of the sub headlight light source 13La within the rider's field of view is less likely to be conspicuous.

In the state shown in FIG. 13, the lean angle increases as compared with the state shown in FIG. 12, but the brightness of the sub headlight light source 13Lb increases so that a region on the path 80 covered by the illumination range having the illuminance $L_1$ is ensured to the same extent as in the state shown in FIG. 12. As a result, the illumination range $SH_2$ of the sub headlight light source 13Lb spreads over the position the rider desires to see (on the path 80). The cut-off line $LL_2$ of the sub headlight light source 13Lb is located at the side (X side) of the illumination range $SH_2$ to which the motorcycle 10 is advancing. The cut-off line $LL_2$ extends right and left along the width direction of the vehicle (Y direction).

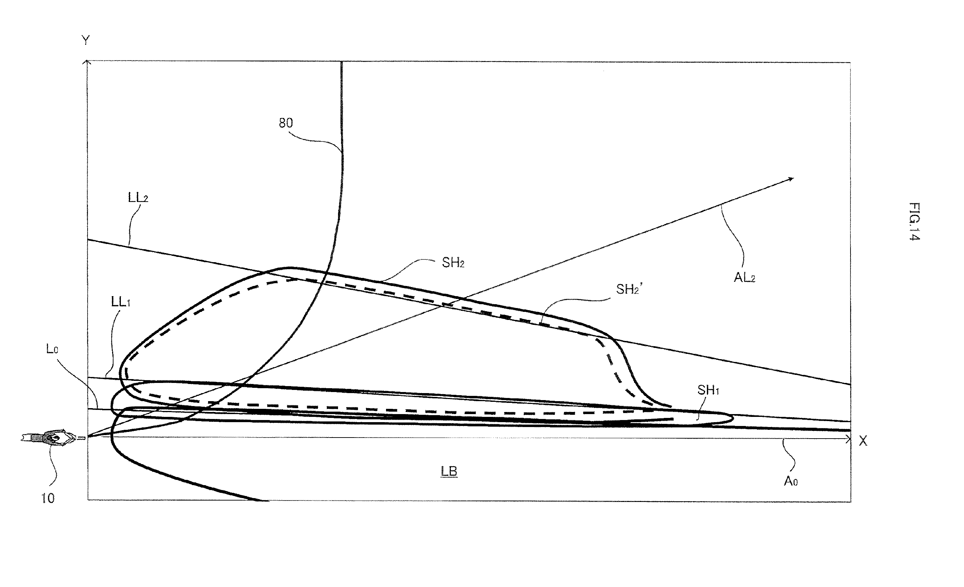

FIG. 14 illustrates a light distribution, schematically showing an illumination range of the headlight produced on a road surface at a time when the lean angle of the motorcycle 10 takes the upper value $U_2$. In this embodiment, the lower value $T_3$ is less than the upper value $U_2$. Therefore, when the lean angle of the motorcycle 10 takes the upper value $U_2$, the sub headlight light source 13Lc has already started to light up. However, the illumination range $SH_3$ of the sub headlight light source 13Lc is not shown in FIG. 14.

In a state shown in FIG. 14, the lean angle of the motorcycle 10 increases as compared with the state shown in FIG. 13. Therefore, the cut-off line $LL_1$ of the sub headlight light source 13La further approaches to the motorcycle 10 as compared with the state shown in FIG. 13. The cut-off line $LL_2$ of the sub headlight light source 13Lb also approaches to the motorcycle 10 from the left side of the motorcycle 10.

On the other hand, while the lean angle is increasing from the reference value $K_2$ to the upper value $U_2$, the brightness of the sub headlight light source 13Lb is increasing from the first brightness $Q_1$ to the second brightness $Q_2$. Therefore, the illumination range $SH_2$ of the sub headlight light source 13Lb is enlarged. In FIG. 14, a region $SH_2$' enclosed by the broken line indicates an illumination range of the sub headlight light source 13Lb obtained when the sub headlight light source 13Lb lights up with the first brightness $Q_1$. The illumination range $SH_2$ of the sub headlight light source 13Lb is larger than the region $SH_2$' enclosed by the broken line.

Thus, in the motorcycle 10, when the lean angle increases from the reference value $K_2$ to the upper value $U_2$, the cut-off line $LL_2$ of the sub headlight light source 13Lb approaches to the motorcycle 10 along with the increase in the lean angle, but the illumination range $SH_2$ is enlarged along with the increase in the brightness of the sub headlight light source 13Lb from the first brightness $Q_1$ to the second brightness $Q_2$. Thereby, the speed of approach of the cut-off line $LL_2$ to the motorcycle 10 can be reduced.

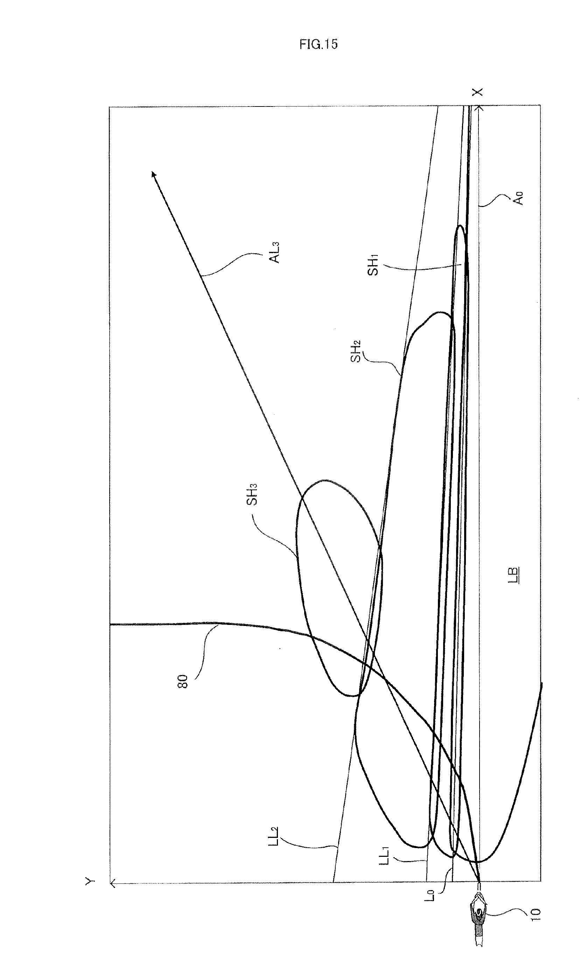

FIG. 15 illustrates a light distribution, schematically showing an illumination range of the headlight produced on a road surface at a time when the lean angle of the motorcycle 10 takes a value that is in the range from the lower value $T_3$ to the reference value $K_3$.

In a state shown in FIG. 15, the lean angle of the motorcycle 10 increases as compared with the state shown in FIG. 14. Therefore, the cut-off line $LL_2$ of the sub headlight light source 13Lb further approaches to the motorcycle 10 as compared with the state shown in FIG. 14. Accordingly, a region on the path 80 covered by the illumination ranges LB, $SH_1$, and $SH_2$ is shortened.

On the other hand, the sub headlight light source 13Lc produces illumination along the optical axis $AL_3$. Therefore, on the path 80, the illumination range $SH_3$ of the sub headlight light source 13Lc covers the cut-off line $LL_2$ of the sub headlight light source 13Lb. Accordingly, the movement of the cut-off line $LL_2$ of the sub headlight light source 13Lb within the rider's field of view is less likely to be conspicuous.

Moreover, a region on the path 80 covered by the illumination range having the illuminance $L_1$ is elongated. The illumination range $SH_3$ of the sub headlight light source 13Lc spreads over the position the rider desires to see.

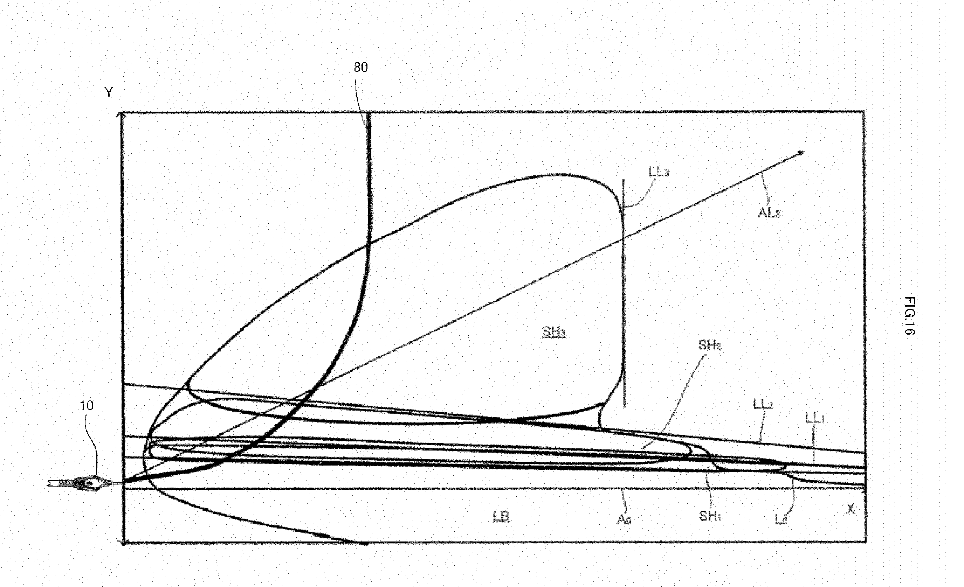

FIG. 16 illustrates a light distribution, schematically showing an illumination range of the headlight produced on a road surface at a time when the lean angle of the motorcycle 10 takes the reference value $K_3$.

In a state shown in FIG. 16, the lean angle of the motorcycle 10 increases as compared with the state shown in FIG. 15. Therefore, the cut-off line $LL_2$ of the sub headlight light source 13Lb further approaches to the motorcycle 10 as compared with the state shown in FIG. 15. Accordingly, the region covered by the illumination range $SH_2$ of the sub headlight light source 13Lb having the illuminance $L_1$ is further shortened.

On the other hand, the sub headlight light source 13Lc is lighting up with the first brightness $Q_1$, and the brightness of the sub headlight light source 13Lc increases along with the increase in the lean angle. Therefore, the illumination range $SH_3$ is enlarged. As a result, the illumination range $SH_3$ of the sub headlight light source 13Lc still covers the cut-off line $LL_2$ of the sub headlight light source 13Lb on the path 80. Accordingly, the movement of the cut-off line $LL_2$ of the sub headlight light source 13Lb within the rider's field of view is less likely to be conspicuous.

In the state shown in FIG. 16, the lean angle increases as compared with the state shown in FIG. 15, but the brightness of the sub headlight light source 13Lc increases so that a region on the path 80 covered by the illumination range having the illuminance $L_1$ is ensured to the same extent as in the state shown in FIG. 15. As a result, the illumination range $SH_3$ of the sub headlight light source 13Lc spreads over the position the rider desires to see (on the path 80). The cut-off line $LL_3$ of the sub headlight light source 13Lc is located at the side (X side) of the illumination range $SH_3$ to which the motorcycle 10 is advancing. The cut-off line $LL_3$ extends right and left along the width direction of the vehicle (Y direction).

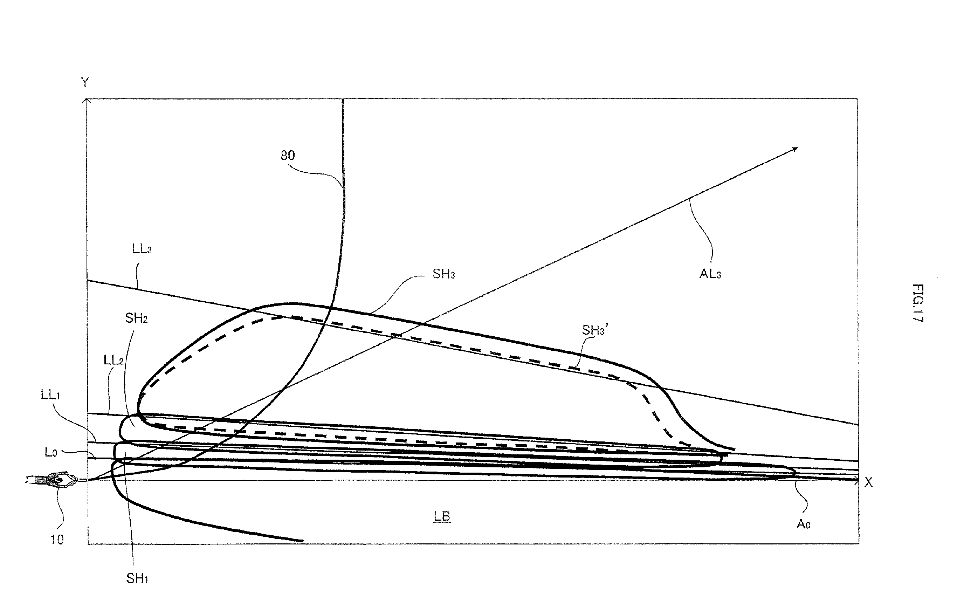

FIG. 17 illustrates a light distribution, schematically showing an illumination range of the headlight produced on a road surface at a time when the lean angle of the motorcycle 10 takes the upper value $U_3$.

In a state shown in FIG. 17, the lean angle of the motorcycle 10 increases as compared with the state shown in FIG. 16. Therefore, the cut-off line $LL_2$ of the sub headlight light source 13Lb further approaches to the motorcycle 10 as compared with the state shown in FIG. 16. The cut-off line $LL_3$ of the sub headlight light source 13Lc also approaches to the motorcycle 10 from the left side of the motorcycle 10.

On the other hand, while the lean angle is increasing from the reference value $K_3$ to the upper value $U_3$, the brightness of the sub headlight light source 13Lc is increasing from the first brightness $Q_1$ to the second brightness $Q_2$. Therefore, the illumination range $SH_3$ of the sub headlight light source 13Lc is enlarged. In FIG. 17, a region $SH_3$' enclosed by the broken line indicates an illumination range of the sub headlight light source 13Lc obtained when the sub headlight light source 13Lc lights up with the first brightness $Q_1$. The illumination range $SH_3$ of the sub headlight light source 13Lc is larger than the region $SH_3$' enclosed by the broken line.

Thus, in the motorcycle 10, when the lean angle increases from the reference value $K_3$ to the upper value $U_3$, the cut-off line $LL_3$ of the sub headlight light source 13Lc approaches to the motorcycle 10 along with the increase in the lean angle, but the illumination range $SH_3$ is enlarged along with the increase in the brightness of the sub headlight light source 13Lc from the first brightness $Q_1$ to the second brightness $Q_2$. Thereby, the speed of approach of the cut-off line $LL_3$ to the motorcycle 10 can be reduced.

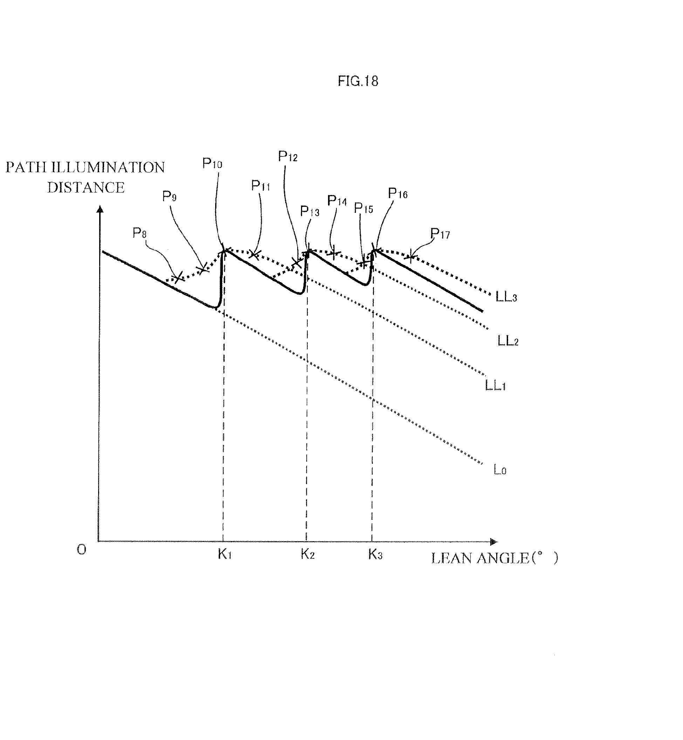

FIG. 18 is a diagram showing the relationship between the lean angle of the motorcycle 10 and an illumination distance of the headlight illuminating the path of the motorcycle 10 according to the first preferred embodiment. The points P8 to P17 correspond to situations shown in FIGS. 8 to 17, respectively.

As the motorcycle 10 is inclined to the left so that the lean angle increases from 0°, the cut-off line $L_0$ of the low beam light source 11 L approaches to the motorcycle 10 from the left side of the motorcycle 10. Therefore, a path irradiation range (which means a distance on the path 80 from the motorcycle 10 to the most distal end of the illumination range) becomes shorter along with the increase in the lean angle. Then, when the lean angle exceeds the lower value $T_1$, the sub headlight light source 13La is turned on, so that the illumination range $SH_1$ of the sub headlight light source 13La is produced (P8). This extends the path irradiation range. Then, along with the increase in the lean angle, the brightness of the sub headlight light source 13La increases to enlarge the illumination range $SH_1$, thus extending the path irradiation range (P9 to P10).

After the lean angle reaches the reference value $K_1$ (P10), the cut-off line $LL_1$ of the sub headlight light source 13La approaches to the motorcycle 10 along with the increase in the lean angle. On the other hand, the brightness of the sub headlight light source 13La increases from the first brightness $Q_1$ to the second brightness $Q_2$, to enlarge the illumination range $SH_1$. As a result, the speed of movement of the cut-off line $LL_1$ to the motorcycle 10 drops, which suppresses a reduction in the path irradiation range along with the increase in the lean angle (P11).

When the lean angle further increases, the sub headlight light source 13Lb is turned on, so that the illumination range $SH_2$ of the sub headlight light source 13Lb is produced. Then, along with the increase in the lean angle, the brightness of the sub headlight light source 13Lb increases to enlarge the illumination range $SH_2$, thus extending the path irradiation range (P12).

After the lean angle reaches the reference value $K_2$ (P13), the cut-off line $LL_2$ of the sub headlight light source 13Lb approaches to the motorcycle 10 along with the increase in the lean angle. On the other hand, the brightness of the sub headlight light source 13Lb increases from the first brightness $Q_1$ to the second brightness $Q_2$, to enlarge the illumination range $SH_2$. As a result, the speed of movement of the cut-off line $LL_2$ to the motorcycle 10 drops, which suppresses a reduction in the path irradiation range along with the increase in the lean angle (P14).

When the lean angle further increases, the sub headlight light source 13Lc is turned on, so that the illumination range $SH_3$ of the sub headlight light source 13Lc is produced. Then, along with the increase in the lean angle, the brightness of the sub headlight light source 13Lc increases to enlarge the illumination range $SH_3$, thus extending the path irradiation range (P15).

After the lean angle reaches the reference value $K_3$ (P16), the cut-off line $LL_3$ of the sub headlight light source 13Lc approaches to the motorcycle 10 along with the increase in the lean angle. On the other hand, the brightness of the sub headlight light source 13Lc increases from the first brightness $Q_1$ to the second brightness $Q_2$, to enlarge the illumination range $SH_3$. As a result, the speed of movement of the cut-off line $LL_3$ to the motorcycle 10 drops, which suppresses a reduction in the path irradiation range along with the increase in the lean angle (P17).

In the motorcycle 10 according to the first preferred embodiment, when the lean angle is equal to or greater than the lower value T that is set for the sub headlight light source 13 (13La to 13Lc) and less than the reference value K that is set for the sub headlight light source 13 (13La to 13Lc), the sub headlight light source 13 lights up with a brightness lower than the first brightness $Q_1$. However, according to the present teaching, it is not essential that the sub headlight light source 13 is turned on when the lean angle is equal to or greater than the lower value T and less than the reference value K. For example, the motorcycle 10 may be configured as a motorcycle 10 according to a second embodiment which will be described below.

<Second Embodiment>

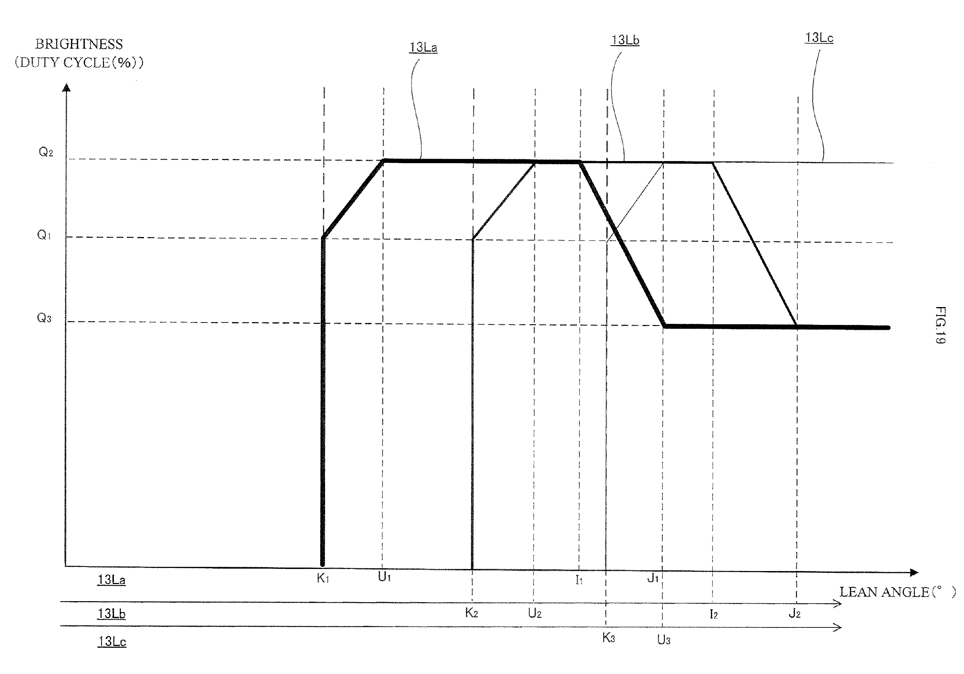

FIG. 19 is a chart showing the relationship between the lean angle of the motorcycle 10 and the brightnesses of the sub headlight light sources 13La to 13Lc according to the second preferred embodiment.

In the motorcycle 10 according to the second preferred embodiment, the lower value T ($T_1$ to $T_3$) is not set. In the motorcycle 10, as shown in FIG. 19, when the lean angle of the motorcycle 10 is less than the reference value K ($K_1$ to $K_3$) that is set for the sub headlight light source 13 (13La to 13Lc), the sub headlight light source 13 (13La to 13Lc) is not turned on.

When the lean angle of the motorcycle 10 takes the reference value K ($K_1$ to $K_3$), the sub headlight light source 13 (13La to 13Lc) lights up with the brightness $Q_1$.

When the lean angle of the motorcycle 10 exceeds the reference value K ($K_1$ to $K_3$), the sub headlight light source 13 (13La to 13Lc) lights up in the same manner as in the first embodiment (FIG. 4). Therefore, a description of the manner will be omitted.

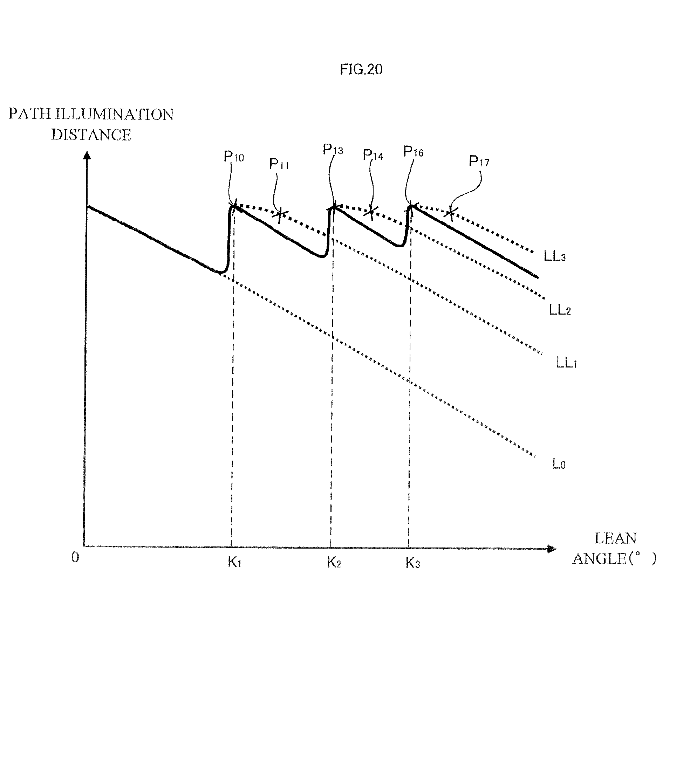

FIG. 20 is a diagram showing the relationship between the lean angle of the motorcycle 10 and the illumination distance of the headlight illuminating the path of the motorcycle 10 according to the second preferred embodiment. The points P10, P11, P13, P14, P16, and P17 correspond to situations shown in FIGS. 10, 11, 13, 14, 16, and 17, respectively.

As the motorcycle 10 is inclined to the left so that the lean angle increases from 0°, the path irradiation becomes shorter. When the lean angle reaches the reference value $K_1$, the sub headlight light source 13La lights up with the brightness $Q_1$, to extend the path irradiation range (P10). Then, along with the increase in the lean angle, the cut-off line $LL_1$ of the sub headlight light source 13La approaches to the motorcycle 10. On the other hand, the brightness of the sub headlight light source 13La increases from the first brightness $Q_1$ to the second brightness $Q_2$, so that the illumination range $SH_1$ is enlarged. As a result, the speed of movement of the cut-off line $LL_1$ to the motorcycle 10 drops, which suppresses a reduction in the path irradiation range along with the increase in the lean angle (P11).

When the lean angle reaches the reference value $K_2$, the sub headlight light source 13Lb lights up with the brightness $Q_1$, to extend the path irradiation range (P13). Then, along with the increase in the lean angle, the cut-off line $LL_2$ of the sub headlight light source 13Lb approaches to the motorcycle 10. On the other hand, the brightness of the sub headlight light source 13Lb increases from the first brightness $Q_1$ to the second brightness $Q_2$, so that the illumination range $SH_2$ is enlarged. As a result, the speed of movement of the cut-off line $LL_2$ to the motorcycle 10 drops, which suppresses a reduction in the path irradiation range along with the increase in the lean angle (P14).

When the lean angle reaches the reference value $K_3$, the sub headlight light source 13Lc lights up with the brightness $Q_1$, to extend the path irradiation range (P16). Then, along with the increase in the lean angle, the cut-off line $LL_3$ of the sub headlight light source 13Lc approaches to the motorcycle 10. On the other hand, the brightness of the sub headlight light source 13Lc increases from the first brightness $Q_1$ to the second brightness $Q_2$, so that the illumination range $SH_3$ is enlarged. As a result, the speed of movement of the cut-off line $LL_3$ to the motorcycle 10 drops, which suppresses a reduction in the path irradiation range along with the increase in the lean angle (P17).

As described above, in the sub headlight unit 13L, when the lean angle of the motorcycle 10 changes from the reference value $K_1$ to $K_3$ to the upper value $U_1$ to $U_3$, the brightness of the corresponding sub headlight light sources 13La to 13Lc changes from the first brightness $Q_1$ to the second brightness $Q_2$. Accordingly, the brightnesses of the sub headlight light sources 13La to 13Lc increase along with the increase in the lean angle. As a result, the illumination ranges $SH_1$ to $SH_3$ of the sub headlight light sources 13La to 13Lc having a predetermined illuminance are enlarged. This can reduce the speed of approach of the cut-off line $LL_1$ to $LL_3$ to the motorcycle 10 along with the increase in the lean angle. Since the speed of movement of the cut-off line $LL_1$ to $LL_3$ is reduced, a change in the speed of movement of the cut-off line $LL_1$ to $LL_3$ which occurs in each turn can be made small. This enables suppression of an uncomfortable feeling, which may otherwise be given to the rider.

Since a reduction in the illumination ranges $SH_1$ to $SH_3$ of the sub headlight light sources 13La to 13Lc is suppressed, occurrence of a time period during which the position the rider desires to see is not sufficiently covered by the illumination ranges $SH_1$ to $SH_3$ of the headlight can be suppressed. This enables suppression of an uncomfortable feeling, which may otherwise be given to the rider.

Moreover, in the course of lighting up of the sub headlight light sources 13La to 13Lc, when, firstly, the lean angle of the motorcycle 10 takes the reference value K ($K_1$ to $K_3$), the corresponding sub headlight light source 13La to 13Lc lights up with the first brightness $Q_1$, and then, when the lean angle of the motorcycle 10 reaches the upper value $U_1$ to $U_3$, the brightness of the corresponding sub headlight light source 13La to 13Lc is changed to the second brightness $Q_2$. This enables suppression of occurrence of a situation where the sub headlight light sources 13La to 13Lc suddenly lights up with a high brightness, which may make the rider feel uncomfortable.

According to the present teaching, it may be possible that the brightness of the low beam light source 11 L increases in accordance with the increase in the lean angle. In this case, when the lean angle of the motorcycle 10 takes a reference value K that is set for the low beam light source 11L, the low beam light source 11 L lights up with a first brightness, and also when the lean angle of the motorcycle 10 is less than the reference value K, the low beam light source 11 L lights up with the first brightness. When the lean angle of the motorcycle 10 exceeds the reference value K and reaches an upper value U, the low beam light source 11 L lights up with a second brightness. This can reduce the speed of approach of the cut-off line $L_0$ of the low beam light source 11 L to the motorcycle 10.

This embodiment describes a case where the sub headlight units 13L and 13R correspond to a headlight unit of the present teaching. However, the present teaching is not limited to this example. The headlight unit of the present teaching may include not only a sub headlight light source but also a high beam light source and a low beam light source serving as a main headlight. It may be also acceptable that the headlight unit of the present teaching includes the sub headlight light source and the low beam light source but not includes the high beam light source. In the headlight unit of the present teaching, in a case where the low beam light source configured to change its brightness in accordance with the lean angle of the vehicle as described above is provided, the sub headlight light source may not be provided. In this case, the brightness of the low beam light source changes in accordance with the lean angle of the vehicle. In a possible example, when the lean angle of the vehicle is 0°, the low beam light source lights up with the brightness $Q_1$, and then the brightness of the low beam light source continuously changes from $Q_1$ to $Q_2$ in accordance with the increase in the lean angle. In another possible example, when the lean angle of the vehicle is 0° or more and a predetermined value or less, the low beam light source lights up with the brightness $Q_1$, and when the lean angle of the vehicle increases beyond the predetermined value, the brightness of the low beam light source continuously changes from $Q_1$ to $Q_2$.

In the motorcycle 10 according to this embodiment, the sub headlight 13 is composed of the sub headlight units 13L and 13R, each of which is provided at each side with respect to the width direction of the vehicle. However, the present teaching is not limited to this example. For example, in a possible configuration, the sub headlight units 13L and 13R each provided at each side with respect to the width direction of the vehicle are formed integral with each other, as a single sub headlight unit. In this case, the single sub headlight unit has, at each side thereof with respect to the width direction of the vehicle, a plurality of headlight light sources that generate illumination ranges at one side with respect to the width direction of the vehicle. Such a sub headlight unit also corresponds to the headlight unit of the present teaching.

This embodiment describes a case where each of the sub headlight units 13L and 13R is a physically integrated unit. However, the present teaching is not limited to this example. It may be possible that the sub headlight unit 13L is physically divided into the sub headlight light sources 13La to 13Lc. In this case, it may be possible that these sub headlight light sources 13La to 13Lc are assembled into a single sub headlight unit 13L which is then installed in the motorcycle 10 (vehicle). It may be also possible that each of the sub headlight light sources 13La to 13Lc is individually installed in the motorcycle 10. In this case, the sub headlight light sources 13La to 13Lc, in a state of being installed in the motorcycle 10, constitute a single sub headlight unit 13L. Such a sub headlight unit corresponds to the headlight unit of the present teaching.

In this embodiment, the sub headlight units 13L and 13R are members separate from the main headlight 11. However, the present teaching is not limited to this example. It may be acceptable that a sub headlight unit is integrated with a main headlight.

The lean angle sensor 22 and the vehicle speed sensor 23 correspond to a detection part for detecting variables available for obtaining the lean angle of the motorcycle 10. Although the detection part includes the lean angle sensor 22 and the vehicle speed sensor 23 in this embodiment, the present teaching is not limited to this example. For example, the detection part may include the lean angle sensor 22 while not including the vehicle speed sensor 23. The controller 20 corresponds to a control part of the present teaching. However, a hardware configuration of the present teaching is not limited to this example. The control part determines whether or not the lean angle of the motorcycle 10 has reached the reference value based on the variables detected by the detection part. At this time, it is not always necessary that the control part calculates the lean angle. No particular limitation is put on details of processing performed in the control part. For example, it may be possible that a memory provided in the controller 20 serving as the control part stores, in the form of data, a table in which the angular velocity (roll rate) and the vehicle speed are associated with a result of whether or not the lean angle has reached a first reference value. In this case, the control part refers to the table based on the angular velocity and the vehicle speed, and thereby can determine whether or not the lean angle has reached the first reference value without calculating the lean angle.

In this embodiment, the lean angle is the angle of inclination of the vehicle body to the inner side of a curve relative to the upright state (vertical direction). However, the present teaching is not limited to this example. The lean angle may be the angle of inclination of the vehicle body to the inner side of a curve relative to a direction perpendicular to a road surface. As a method and a device for measuring the angle of inclination of the vehicle body to the inner side of a curve relative to the direction perpendicular to the road surface, conventionally known ones are adoptable.

This embodiment describes a case where the sub headlight units 13L and 13R are members separate from the control part (controller 20) and the detection part (the lean angle sensor 22 and the vehicle speed sensor 23). However, the present teaching is not limited to this example. The sub headlight unit may include at least one of the control part, the communication part, and the detection part.

In this embodiment, three sub headlight light sources are provided at each side of the vehicle with respect to the width direction of the vehicle. According to the present teaching, however, no particular limitation is put on the number of light sources. It is preferable that the number of sub headlight light sources that illuminate one side of the vehicle with respect to the width direction of the vehicle is at least three.

In this embodiment, each of the sub headlight light sources and the low beam light source is constituted of one light source, and one reference value is set for this one light source. However, according to the present teaching, the number of light sources that constitute one sub headlight light source or the low beam light source is not particularly limited. For example, it may be acceptable that one sub headlight light source or the low beam light source is constituted of a plurality of light sources and one reference value is set for the plurality of light sources.

This embodiment describes a case where the reference value used when the lean angle increases so that the brightness of the sub headlight light source increases is the same as the reference value used when the lean angle decreases so that the brightness of the sub headlight light source decreases. Instead, these reference values may be different from each other.

This embodiment describes a case where the sub headlight light source is turned on in accordance with the lean angle. However, the present teaching is not limited to this example. The sub headlight light source may be configured such that a turn-on function in accordance with the lean angle is manually activated or deactivated. To be specific, it may be possible that the function is manually put into a standby state and, in the standby state, the sub headlight light source is turned on in accordance with the lean angle. In this case as well, the sub headlight light source is turned on not manually but in accordance with the lean angle. In the flasher, on the other hand, flashing/turn-off is manually switched. Also, in the main headlight, the illuminating direction is manually switched. In this manner, the sub headlight light source is different from the flasher and the main headlight.

The sub headlight light source may be also configured such that an instruction for turn-on or turn-off is manually inputted. In such a case, when the instruction is not inputted, the brightness of the sub headlight light source is changed in accordance with the lean angle, while when the instruction is inputted, turn-on or turn-off is performed in accordance with the instruction. For example, when the instruction for turn-on is inputted, the sub headlight light source is turned on irrespective of the lean angle. When the instruction for turn-off is inputted, the sub headlight light source is turned off irrespective of the lean angle. In such a case, the sub headlight system includes an input part (for example, a switch) to which the instruction for turning on or off the sub headlight light source is manually inputted. When the instruction is inputted, the control part turns on or off the sub headlight light source in accordance with the instruction. When the instruction is not inputted, the control part changes the brightness of the sub headlight light source in accordance with the lean angle. In this case as well, the sub headlight light source is different from the flasher and the main headlight, in that a function of turning on the sub headlight light source in accordance with the lean angle is provided.

The sub headlight light source may be configured such that, when the lean angle is equal to or larger than a minimum reference value, the brightness is changed in accordance with the lean angle, while when the lean angle is less than the minimum reference value (for example, at a time of running straight ahead), the brightness is manually changed. In this case as well, the sub headlight light source is different from the flasher and the main headlight, in that a function of turning on the sub headlight light source in accordance with the lean angle is provided.

In the description of this embodiment, the sub headlight light source is turned on in accordance with the lean angle. Here, the sub headlight light source is turned on in accordance with the lean angle because the sub headlight light source functions mainly as a light for ensuring the field of view of the rider of the vehicle. Therefore, in a well-lit situation, for example, in daytime, the sub headlight light source may not necessarily be turned on in accordance with the lean angle.

The embodiments also discloses a method for controlling a headlight unit in a vehicle that leans into turns, wherein the headlight unit includes a headlight light source whose illumination range is partially or entirely contained in one side of the vehicle with respect to a width direction of the vehicle when the vehicle is in an upright state, the method comprises:

changing a brightness of the headlight light source in accordance with a lean angle of the vehicle,
lighting up the headlight light source with a first brightness, when the lean angle of the vehicle leaning to the one side with respect to the width direction of the vehicle takes a reference value that is set for the headlight light source, and
changing the brightness of the headlight light source from the first brightness to a second brightness that is higher than the first brightness, when the lean angle of the vehicle changes from the reference value to an upper value that is greater than the reference value. Said is also disclosed in combination with the further detaild method aspects of the preferred embodiments.

[DESCRIPTION OF THE REFERENCE NUMERALS]

| | |
|---|---|
| 10 | motorcycle (vehicle that leans into turns) |
| 11 | main headlight |
| 11H | high beam light source |
| 11L | low beam light source |
| 12 | handlebar |
| 13 | sub headlight |
| 13L, 13R | sub headlight unit |
| 13La, 13Lb, 13Lc, 13Ra, 13Rb, 13Rc | sub headlight light source |
| 14L, 14R | flasher |
| 15 | operation switch |
| 16 | front wheel |
| 17 | frontfork |
| 18 | front cover |
| 20 | controller |
| 22 | lean angle sensor |
| 23 | vehicle speed sensor |
| 80 | path |

**Claims**

1. A headlight unit for use in a vehicle that leans into turns, wherein the headlight unit includes a headlight light source (13La, 13Lb, 13Lc, 13Ra, 13Rb, 13Rc) whose illumination range is partially or entirely contained in one side of the vehicle with respect to a width direction of the vehicle when the vehicle is in an upright state, the headlight unit is adapted such that the brightness of the headlight light source (13La, 13Lb, 13Lc, 13Ra, 13Rb, 13Rc) changes in accordance with a lean angle of the vehicle, when the lean angle of the vehicle leaning to the one side with respect to the width direction of the vehicle takes a reference value ($K_1$-$K_3$) that is set for the headlight light source (13La, 13Lb, 13Lc, 13Ra, 13Rb, 13Rc), the headlight light source (13La, 13Lb, 13Lc, 13Ra, 13Rb, 13Rc) is configured to light up with brightness increased to a first brightness ($Q_1$), **characterized in that** when the lean angle of the vehicle changes from the reference value ($K_1$-$K_3$) to an upper value ($U_1$-$U_3$) that is greater than the reference value ($K_1$-$K_3$), the brightness of the headlight light source (13La, 13Lb, 13Lc, 13Ra, 13Rb, 13Rc) changes from the first brightness ($Q_1$) to a second brightness ($Q_2$) that is higher than the first brightness ($Q_1$).

2. A headlight unit according to claim 1, **characterized in that** the headlight unit includes, as the headlight light source, a sub headlight light source (13La, 13Lb, 13Lc, 13Ra, 13Rb, 13Rc) that is configured to illuminate, at the one side with respect to the width direction of the vehicle, an area ahead and outward of the vehicle with respect to the width direction of the vehicle, the sub headlight light source (13La, 13Lb, 13Lc, 13Ra, 13Rb, 13Rc) is configured such that an illumination range thereof contains a space above a horizontal line when the vehicle is in the upright state, when the lean angle of the vehicle reaches a reference value ($K_1$-$K_3$) that is set for the sub headlight light source (13La,13Lb,13Lc,13Ra,13Rb,13Rc), the illumination range of the sub headlight light source (13La, 13Lb, 13Lc, 13Ra, 13Rb, 13Rc) is located in a space below a horizontal line.

3. A headlight unit according to claim 1 or 2, **characterized in that** the headlight unit includes, as the headlight light source, a sub headlight light source (13La, 13Lb, 13Lc, 13Ra, 13Rb, 13Rc) that is configured to illuminate, at the one side with respect to the width direction of the vehicle, an area ahead and outward of the vehicle with respect to the width direction of the vehicle, a cut-off line ($LL_1$-$LL_3$) of the sub headlight light source (13La, 13Lb, 13Lc, 13Ra, 13Rb, 13Rc) obtained when the lean angle of the vehicle reaches a reference value ($K_1$-$K_3$) that is set for the sub headlight light source (13La, 13Lb,

13Lc, 13Ra, 13Rb, 13Rc) is closer to horizontal than a cut-off line (LL$_1$-LL$_3$) of the sub headlight light source (13La, 13Lb, 13Lc, 13Ra, 13Rb, 13Rc) obtained when the vehicle is in the upright state and a cut-off line (LL$_1$-LL$_3$) of the sub headlight light source (13La, 13Lb, 13Lc, 13Ra, 13Rb, 13Rc) obtained when the lean angle of the vehicle reaches an upper value (U$_1$-U$_3$) that is set for the sub headlight light source (13La, 13Lb, 13Lc, 13Ra, 13Rb, 13Rc).

4. A headlight unit according to any one of claims 1 to 3, **characterized in that** the headlight unit comprises a plurality of the headlight light sources (13La, 13Lb, 13Lc, 13Ra, 13Rb, 13Rc),
the reference value (K$_1$-K$_3$) and the upper value (U$_1$-U$_3$) are individually set for each of the headlight light sources.

5. A headlight unit according to claim 4, **characterized in that** the upper value (U$_1$-U$_3$) of one headlight light source is smaller than the reference value (K$_1$-K$_3$) of another headlight light source for which the next greatest reference value (K$_1$-K$_3$) after that of the one headlight light source is set.

6. A headlight unit according to any one of claims 1 to 5, **characterized in that** when the lean angle of the vehicle reaches a specific value (I$_1$,I$_2$) that is greater than the upper value (U$_1$-U$_3$) set for the headlight light source (13La, 13Lb, 13Lc, 13Ra, 13Rb, 13Rc), the brightness of the headlight light source (13La, 13Lb, 13Lc, 13Ra, 13Rb, 13Rc) becomes lower than the second brightness (Q$_2$).

7. A headlight unit according to claim 6, **characterized in that** the headlight unit includes, as the headlight light source, a sub headlight light source (13La, 13Lb, 13Lc, 13Ra, 13Rb, 13Rc) that is configured to illuminate, at the one side with respect to the width direction of the vehicle, an area ahead and outward of the vehicle with respect to the width direction of the vehicle, wherein the headlight unit includes plurality of the headlight light sources, and the reference value (K$_1$-K$_3$), the upper value (U$_1$-U$_3$), and the specific value (I$_1$,I$_2$) are individually set for each of the headlight light sources (13La, 13Lb, 13Lc, 13Ra, 13Rb, 13Rc).

8. A headlight unit according to claim 7, **characterized in that** the specific value (I$_1$,I$_2$) of one headlight light source is greater than the upper value (U$_1$-U$_3$) of another headlight light source for which the next greatest reference after that of the one headlight light source is set.

9. A headlight unit according to any one of claims 1 to 8, **characterized in that** an optical axis of the headlight light source is fixed,
the headlight light source whose optical axis is fixed is configured to light up with the first brightness (Q$_1$) when the lean angle of the vehicle reaches the reference value (K$_1$-K$_3$) that is set for the headlight light source, and is configured to light up with the second brightness (Q$_2$) when the lean angle of the vehicle reaches the upper value (U$_1$-U$_3$) that is set for the headlight light source.

10. A headlight unit according to any one of claims 1 to 9, **characterized in that** the headlight unit includes, as the headlight light source, a sub headlight light source that is configured to illuminate, at the one side with respect to the width direction of the vehicle, an area ahead and outward of the vehicle with respect to the width direction of the vehicle,
in a time period from when the lean angle of the vehicle reaches a lower value that is smaller than the reference value (K$_1$-K$_3$) set for the headlight light source to when the lean angle of the vehicle reaches the reference value (K$_1$-K$_3$), the sub headlight light source lights up with a brightness lower than the first brightness (Q$_1$).

11. A headlight unit according to claim 10, **characterized in that** the headlight unit includes, a plurality of the headlight light sources,
the reference value (K$_1$-K$_3$), the upper value (U$_1$-U$_3$), and the lower value of each of the sub headlight light sources are individually set to the headlight light source,
the upper value (U$_1$-U$_3$) of one sub headlight light source is equal to or greater than the lower value of another sub headlight light source for which the next greatest reference value (K$_1$-K$_3$) after that of the one sub headlight light source is set.

12. A headlight system for use in a vehicle that leans into turns,
the headlight system comprising a headlight unit (13L,13R) according to any one of claims 1 to 11.

13. A headlight system for use in a vehicle that leans into turns according to claim 12, further comprising:

a control part that is configured to change the brightness of the headlight light source in accordance with the lean angle of the vehicle; and

a detection part that is configured to detect a variable available for obtaining the lean angle of the vehicle, wherein, when the lean angle of the vehicle leaning to the one side with respect to the width direction of the vehicle reaches the reference value ($K_1$-$K_3$) that is set for the headlight light source, the control part causes the headlight light source to light up the first brightness ($Q_1$), and when the lean angle of the vehicle reaches the upper value ($U_1$-$U_3$) that is set for the headlight light source, the control part causes the headlight light source to light up with the second brightness ($Q_2$).

14. A vehicle that leans into turns, the vehicle comprising the system according to claim 12 or 13.

15. A method for controlling a headlight unit in a vehicle that leans into turns, wherein the headlight unit includes a headlight light source whose illumination range is partially or entirely contained in one side of the vehicle with respect to a width direction of the vehicle when the vehicle is in an upright state, the method comprises:

changing a brightness of the headlight light source in accordance with a lean angle of the vehicle, lighting up the headlight light source with brightness increased to a first brightness ($Q_1$), when the lean angle of the vehicle leaning to the one side with respect to the width direction of the vehicle takes a reference value ($K_1$-$K_3$) that is set for the headlight light source, **characterized by** changing the brightness of the headlight light source from the first brightness ($Q_1$) to a second brightness ($Q_2$) that is higher than the first brightness ($Q_1$), when the lean angle of the vehicle changes from the reference value ($K_1$-$K_3$) to an upper value ($U_1$-$U_3$) that is greater than the reference value ($K_1$-$K_3$).

## Patentansprüche

1. Eine Scheinwerfer-Einheit zur Verwendung in einem Fahrzeug, das sich in Kurven legt, wobei die Scheinwerfer-Einheit eine Scheinwerfer-Lichtquelle (13La, 13Lb, 13Lc, 13Ra, 13Rb, 13Rc) beinhaltet, deren Ausleuchtebereich teilweise oder vollständig auf einer Seite des Fahrzeugs mit Bezug eine Breiten-Richtung des Fahrzeugs liegt, wenn das Fahrzeug in einem aufrechten Zustand ist, die Scheinwerfer-Einheit ist angepasst, so dass die Helligkeit der Scheinwerfer-Lichtquelle (13La, 13Lb, 13Lc, 13Ra, 13Rb, 13Rc) sich in Übereinstimmung mit einem Neigungswinkel des Fahrzeugs ändert, wenn der Neigungswinkel des Fahrzeugs, das sich auf die eine Seite mit Bezug auf die Breiten-Richtung des Fahrzeugs neigt, einen Referenzwert ($K_1$-$K_3$) annimmt, der für die Scheinwerfer-Lichtquelle (13La, 13Lb, 13Lc, 13Ra, 13Rb, 13Rc) gesetzt ist, ist die Scheinwerfer-Lichtquelle (13La, 13Lb, 13Lc, 13Ra, 13Rb, 13Rc) konfiguriert mit einer Helligkeit aufzuleuchten, erhöht auf eine erste Helligkeit ($Q_1$), **dadurch gekennzeichnet, dass**, wenn der Neigungswinkel des Fahrzeugs von dem Referenzwert ($K_1$-$K_3$) sich zu einen oberen Wert ($U_1$-$U_3$) ändert, der größer ist als der Referenzwert ($K_1$-$K_3$), ändert sich die Helligkeit der Scheinwerfer-Lichtquelle (13La, 13Lb, 13Lc, 13Ra, 13Rb, 13Rc) von der ersten Helligkeit ($Q_1$) zu einer zweiten Helligkeit ($Q_2$), die höher ist als die erste Helligkeit ($Q_1$).

2. Die Scheinwerfer-Einheit gemäß Anspruch 1, **dadurch gekennzeichnet, dass** die Scheinwerfer-Einheit, als die Scheinwerfer-Lichtquelle, eine Unter-Scheinwerfer-Lichtquelle (13La, 13Lb, 13Lc, 13Ra, 13Rb, 13Rc) beinhaltet, die konfiguriert ist zum Ausleuchten, an einer Seite mit Bezug auf die Breiten-Richtung des Fahrzeugs, eines Bereichs vor und außerhalb des Fahrzeugs mit Bezug auf die Breiten-Richtung des Fahrzeugs, die Unter-Scheinwerfer-Lichtquelle (13La, 13Lb, 13Lc, 13Ra, 13Rb, 13Rc) ist konfiguriert, so dass ein Ausleuchtebereich derselben einen Raum oberhalb einer horizontalen Linie beinhaltet, wenn das Fahrzeug in dem aufrechten Zustand ist, wenn der Neigungswinkel des Fahrzeugs einen Referenzwerk ($K_1$-$K_3$) erreicht, der für die Unter-Scheinwerfer-Lichtquelle (13La, 13Lb, 13Lc, 13Ra, 13Rb, 13Rc) gesetzt ist, ist der Ausleuchtebereich der Unter-Scheinwerfer-Lichtquelle (13La, 13Lb, 13Lc, 13Ra, 13Rb, 13Rc) in einen Bereich unterhalb einer horizontalen Linie angeordnet.

3. Eine Scheinwerfer-Einheit gemäß Anspruch 1 oder 2, **dadurch gekennzeichnet, dass** die Scheinwerfer-Einheit, als die Scheinwerfer-Lichtquelle, eine Unter-Scheinwerfer-Lichtquelle (13La, 13Lb, 13Lc, 13Ra, 13Rb, 13Rc) beinhaltet, die konfiguriert ist zum Ausleuchten, an der einen Seite mit Bezug auf die Breiten-Richtung des Fahrzeugs, eines Bereichs vor und außerhalb des Fahrzeugs mit Bezug auf die Breiten-Richtung des Fahrzeugs, eine Abschneidlinie ($LL_1$-$LL_3$) der Unter-Scheinwerfer-Lichtquelle (13La, 13Lb, 13Lc, 13Ra, 13Rb, 13Rb, 13Rc), erhalten, wenn der Neigungswinkel des Fahrzeugs einen Referenzwert ($K_1$-$K_3$) erreicht, der für die Unter-Scheinwerfer-Lichtquelle (13La, 13Lb, 13Lc, 13Ra, 13Rb, 13Rc) gesetzt ist, ist näher zu Horizontal als eine Abschneidlinie (LL1-LL3) der Unter-Scheinwerfer-Lichtquelle (13La, 13Lb, 13Lc, 13Ra, 13Rb, 13Rc), erhalten, wenn das Fahrzeug in dem aufrechten Zustand ist, und eine Abschneidlinie (LL1-LL3) der Unter-Scheinwerfer-Lichtquelle (13La, 13Lb, 13Lc, 13Ra, 13Rb, 13Rc) erhalten, wenn der Neigungswinkel des Fahrzeugs einen oberen Wert ($U_1$-$U_3$) erreicht, der für die Unter-Scheinwerfer-Lichtquelle (13La, 13Lb, 13Lc, 13Ra, 13Rb, 13Rc) gesetzt ist.

4. Eine Scheinwerfer-Einheit gemäß irgendeinem der Ansprüche 1 bis 3, **dadurch gekennzeichnet, dass** die Scheinwerfer-Einheit eine Mehrzahl von Scheinwerfer-Lichtquellen (13La, 13Lb, 13Lc, 13Ra, 13Rb, 13Rc) umfasst, der Referenzwerk ($K_1$-$K_3$) und der obere Wert ($U_1$-$U_3$) sind individuell jede der Scheinwerfer-Lichtquellen gesetzt.

5. Eine Scheinwerfer-Einheit gemäß Anspruch 4, **dadurch gekennzeichnet, dass** der obere Wert ($U_1$-$U_3$) der einen Scheinwerfer-Lichtquelle niedriger ist als der Referenzwert ($K_1$-$K_3$) einer anderen Scheinwerfer-Lichtquelle für die der nächst größere Referenzwert ($K_1$-$K_3$), nach dem der einen Scheinwerfer-Lichtquelle, gesetzt ist.

6. Eine Scheinwerfer-Einheit gemäß irgendeinem der Ansprüche 1 bis 5, **dadurch gekennzeichnet, dass**, wenn der Neigungswinkel des Fahrzeugs einen spezifischen Wert ($I_1$,$I_2$) erreicht, der größer ist als der obere Wert ($U_1$-$U_3$), gesetzt für die Scheinwerfer-Lichtquelle (13La, 13Lb, 13Lc, 13Ra, 13Rb, 13Rc), wird die Helligkeit der Scheinwerfer-Lichtquelle (13LA, 13Lb, 13Rc, 13Ra, 13Rb, 13Rc) niedriger als die zweite Helligkeit ($Q_2$).

7. Eine Scheinwerfer-Einheit gemäß Anspruch 6, **dadurch gekennzeichnet, dass** die Scheinwerfer-Einheit, als die Scheinwerfer-Lichtquelle, eine Unter-Scheinwerfer-Lichtquelle (13La, 13Lb, 13Lc, 13Ra, 13Rb, 13Rc) beinhaltet, die konfiguriert ist zum Ausleuchten, an einer Seite mit Bezug auf die Breiten-Richtung des Fahrzeugs, eines Bereichs vor und außerhalb des Fahrzeugs mit Bezug auf die Breiten-Richtung des Fahrzeugs, wobei die Scheinwerfer-Einheit eine Mehrzahl von Scheinwerfer-Lichtquellen beinhaltet, und der Referenzwert ($K_1$-$K_3$), der obere Wert ($U_1$-$U_3$) und der spezifische Wert ($I_1$,$I_2$) individuell für jede der Scheinwerfer-Lichtquellen (13La, 13Lb, 13Lc, 13Ra, 13Rb, 13Rc) gesetzt sind.

8. Eine Scheinwerfer-Einheit gemäß Anspruch 7, **dadurch gekennzeichnet, dass** der spezifische Wert ($I_1$,$I_2$) der einen Scheinwerfer-Lichtquelle größer ist als der obere Wert ($U_1$-$U_3$) der anderen Scheinwerfer-Lichtquelle, für die der nächstgrößere Referenzwert nach dem der einen Scheinwerfer-Lichtquelle gesetzt ist.

9. Eine Scheinwerfer-Einheit gemäß irgendeinem der Ansprüche 1 bis 8, **dadurch gekennzeichnet, dass** eine optische Achse der Scheinwerfer-Lichtquelle fixiert ist, die Scheinwerfer-Lichtquelle, deren optische Achse fixiert ist, ist konfiguriert, um mit der ersten Helligkeit ($Q_1$) aufzuleuchten, wenn der Neigungswinkel des Fahrzeugs den Referenzwerkt ($K_1$-$K_3$) erreicht, der für die Scheinwerfer-Lichtquelle gesetzt ist, und ist konfiguriert, um mit der zweiten Helligkeit ($Q_2$) aufzuleuchten, wenn der Neigungswinkel des Fahrzeugs den oberen Wert ($U_1$-$U_3$) erreicht, der für die Scheinwerfer-Lichtquelle gesetzt ist.

10. Eine Scheinwerfer-Einheit gemäß irgendeinem der Ansprüche 1 bis 9, **dadurch gekennzeichnet, dass** die Scheinwerfer-Einheit, als die Scheinwerfer-Lichtquelle, eine Unter-Scheinwerfer-Lichtquelle beinhaltet, die konfiguriert ist zum Ausleuchten, an einer Seite mit Bezug auf die Breiten-Richtung des Fahrzeugs, eines Bereichs vor und außerhalb des Fahrzeugs mit Bezug auf die Breiten-Richtung des Fahrzeugs, in einer Zeitperiode von, wenn der Neigungswinkel des Fahrzeugs einen unteren Wert erreicht, der kleiner ist als der Referenzwert ($K_1$-$K_3$), gesetzt für die Scheinwerfer-Lichtquelle, zu, wenn der Neigungswinkel des Fahrzeugs den Referenzwert ($K_1$-$K_3$) erreicht, leuchtet die Unter-Scheinwerfer-Lichtquelle mit einer Helligkeit, niedriger als die erste Helligkeit ($Q_1$), auf.

11. Eine Scheinwerfer-Einheit gemäß Anspruch 10, **dadurch gekennzeichnet, dass** die Scheinwerfer-Einheit eine Mehrzahl von den Scheinwerfer-Lichtquellen beinhaltet, der Referenzwert ($K_1$-$K_3$), der obere Wert ($U_1$-$U_3$) und der untere Wert von jeder der Unter-Scheinwerfer-Lichtquellen sind individuell für die Scheinwerfer-Lichtquellen gesetzt, der obere Wert ($U_1$-$U_3$) von einer Unter-Scheinwerfer-Lichtquelle ist gleich oder größer als der untere Wert einer anderen Unter-Scheinwerfer-Lichtquelle, für die der nächstgrößere Referenzwert ($K_1$-$K_3$) nach der einen Unter-Scheinwerfer-Lichtquelle gesetzt ist.

12. Ein Scheinwerfersystem zur Verwendung in einem Fahrzeug, das sich in Kurven legt, das Scheinwerfersystem umfasst eine Scheinwerfer-Einheit (13L, 13R) gemäß irgendeinem der Ansprüche 1 bis 11.

13. Ein Scheinwerfersystem zur Verwendung in einem Fahrzeug, das sich in Kurven legt gemäß Anspruch 12, das weiterhin umfasst:

einen Steuer-Teil, der konfiguriert ist, um die Helligkeit der Scheinwerfer-Lichtquelle in Übereinstimmung mit dem Neigungswinkel des Fahrzeugs zu ändern; und

einen Erfassungs-Teil der konfiguriert ist, um eine Variable, verfügbar zum Erhalten des Neigungswinkels des Fahrzeugs, zu erfassen,

wobei, wenn der Neigungswinkel des Fahrzeugs, das sich zu einer Seite mit Bezug auf die Breiten-Richtung des Fahrzeugs neigt, den Referenzwert ($K_1$-$K_3$) erreicht, der für die Scheinwerfer-Lichtquelle gesetzt ist, bewirkt der Steuer-Teil, dass die Scheinwerfer-Lichtquelle in der ersten Helligkeit ($Q_1$) aufleuchtet, und wenn der Neigungswinkel des Fahrzeugs den oberen Wert ($U_1$-$U_3$) erreicht, der für die Lichtquelle gesetzt ist, bewirkt der Steuer-Teil, dass die Scheinwerfer-Lichtquelle mit der zweiten Helligkeit ($Q_2$) aufleuchtet.

**14.** Ein Fahrzeug, das sich in Kurven legt, das Fahrzeug umfasst das System gemäß Anspruch 12 oder 13.

**15.** Ein Verfahren zur Steuerung einer Scheinwerfer-Einheit in einem Fahrzeug, dass sich in Kurven legt, wobei die Scheinwerfer-Einheit eine Scheinwerfer-Lichtquelle beinhaltet, deren Ausleuchtebereich teilweise oder vollständig auf einer Seite des Fahrzeugs mit Bezug auf die Breiten-Richtung des Fahrzeugs liegt, wenn das Fahrzeug in einem aufrechten Zustand ist, das Verfahren umfasst:

Ändern einer Helligkeit der Scheinwerfer-Lichtquelle in Übereinstimmung mit einem Neigungswinkle des Fahrzeugs,

Aufleuchten der Scheinwerfer-Lichtquelle mit einer Helligkeit, erhöht zu einer ersten Helligkeit ($Q_1$), wenn der Neigungswinkel des Fahrzeugs, das sich zu der einen Seite mit Bezug auf die Breiten-Richtung des Fahrzeugs neigt, einen ersten Referenzwert ($K_1$-$K_3$) annimmt, der für die Scheinwerfer-Lichtquelle gesetzt ist, **gekennzeichnet durch**

Ändern der Helligkeit der Scheinwerfer-Lichtquelle von der ersten Helligkeit ($Q_1$) zu einer zweiten Helligkeit ($Q_2$), die höher ist als die erste Helligkeit ($Q_1$), wenn der Neigungswinkel des Fahrzeugs sich von dem Referenzwert ($K_1$-$K_3$) zu einem oberen Wert ($U_1$-$U_3$) ändert, der größer ist als der Referenzwert ($K_1$-$K_3$).

**Revendications**

**1.** Unité de phare destinée à être utilisée dans un véhicule qui penche dans les virages, dans laquelle l'unité de phare comporte une source de lumière de phare (13La, 13Lb, 13Lc, 13Ra, 13Rb, 13Rc) dont la plage d'éclairage est contenue partiellement ou entièrement d'un côté du véhicule par rapport au sens de la largeur du véhicule lorsque le véhicule est dans la position verticale,

l'unité de phare est adaptée de sorte que la luminosité de la source de lumière de phare (13La, 13Lb, 13Lc, 13Ra, 13Rb, 13Rc) varie en fonction de l'angle d'inclinaison du véhicule,

lorsque l'angle d'inclinaison du véhicule qui penche d'un côté par rapport au sens de la largeur du véhicule prend une valeur de référence ($K_1$-$K_3$) qui est réglée pour la source de lumière de phare (13La, 13Lb, 13Lc, 13Ra, 13Rb, 13Rc), la source de lumière de phare (13La, 13Lb, 13Lc, 13Ra, 13Rb, 13Rc) est configurée pour éclairer avec une luminosité accrue jusqu'à une première luminosité ($Q_1$), **caractérisée en ce que**

lorsque l'angle d'inclinaison du véhicule passe de la valeur de référence ($K_1$-$K_3$) à une valeur supérieure ($U_1$-$U_3$) qui est plus grande que la valeur de référence ($K_1$-$K_3$), la luminosité de la source de lumière de phare (13La, 13Lb, 13Lc, 13Ra, 13Rb, 13Rc) passe de la première luminosité ($Q_1$) à une deuxième luminosité ($Q_2$) qui est plus grande que la première luminosité ($Q_1$).

**2.** Unité de phare selon la revendication 1, **caractérisée en ce que** l'unité de phare comporte, en tant que source de lumière de phare, une source de lumière de phare secondaire (13La, 13Lb, 13Lc, 13Ra, 13Rb, 13Rc) qui est configurée pour éclairer d'un côté par rapport au sens de la largeur du véhicule, une zone située en avant et vers l'extérieur du véhicule par rapport au sens de la largeur du véhicule,

la source de lumière de phare secondaire (13La, 13Lb, 13Lc, 13Ra, 13Rb, 13Rc) est configurée de sorte que sa plage d'éclairage contient un espace au-dessus d'une ligne horizontale lorsque le véhicule est dans la position verticale,

lorsque l'angle d'inclinaison du véhicule atteint une valeur de référence ($K_1$-$K_3$) qui est réglée pour la source de lumière de phare secondaire (13La, 13Lb, 13Lc, 13Ra, 13Rb, 13Rc), la plage d'éclairage de la source de lumière de phare secondaire (13La, 13Lb, 13Lc, 13Ra, 13Rb, 13Rc) est située dans l'espace se trouvant en dessous d'une ligne horizontale.

**3.** Unité de phare selon la revendication 1 ou 2, **caractérisée en ce que** l'unité de phare comporte, en tant que source de lumière de phare, une source de lumière de phare secondaire (13La, 13Lb, 13Lc, 13Ra, 13Rb, 13Rc) qui est configurée pour éclairer d'un côté par rapport au sens de la largeur du véhicule, une zone située en avant et vers l'extérieur du véhicule par rapport au sens de la largeur du véhicule,

une ligne de découpe (LL$_1$-LL$_3$) de la source de lumière de phare secondaire (13La, 13Lb, 13Lc, 13Ra, 13Rb, 13Rc) obtenue lorsque l'angle d'inclinaison du véhicule atteint une valeur de référence (K$_1$-K$_3$) qui est réglée pour la source de lumière de phare secondaire (13La, 13Lb, 13Lc, 13Ra, 13Rb, 13Rc) est plus proche de l'horizontale qu'une ligne de découpe (LL$_1$-LL$_3$) de la source de lumière de phare secondaire (13La, 13Lb, 13Lc, 13Ra, 13Rb, 13Rc) obtenue lorsque le véhicule est dans la position verticale et une ligne de découpe (LL$_1$-LL$_3$) de la source de lumière de phare secondaire (13La, 13Lb, 13Lc, 13Ra, 13Rb, 13Rc) obtenue lorsque l'angle d'inclinaison du véhicule atteint une valeur supérieure (U$_1$-U$_3$) qui est réglée pour la source de lumière de phare secondaire (13La, 13Lb, 13Lc, 13Ra, 13Rb, 13Rc).

4. Unité de phare selon l'une quelconque des revendications 1 à 3, **caractérisée en ce que** l'unité de phare comprend une pluralité de sources de lumière de phare (13La, 13Lb, 13Lc, 13Ra, 13Rb, 13Rc),

la valeur de référence (K$_1$-K$_3$) et la valeur supérieure (U$_1$-U$_3$) sont réglées individuellement pour chacune des sources de lumière de phare.

5. Unité de phare selon la revendication 4, **caractérisée en ce que** la valeur supérieure (U$_1$-U$_3$) d'une source de lumière de phare est plus petite que la valeur de référence (K$_1$-K$_3$) d'une autre source de lumière de phare pour laquelle est réglée la valeur de référence la plus grande (K$_1$-K$_3$) qui suit celle de la première source de lumière de phare.

6. Unité de phare selon l'une quelconque des revendications 1 à 5, **caractérisée en ce que**, lorsque l'angle d'inclinaison du véhicule atteint une valeur spécifique (I$_1$, I$_2$) qui est plus grande que la valeur supérieure (U$_1$-U$_3$) réglée pour la source de lumière de phare (13La, 13Lb, 13Lc, 13Ra, 13Rb, 13Rc), la luminosité de la source de lumière de phare (13La, 13Lb, 13Lc, 13Ra, 13Rb, 13Rc) devient inférieure à la deuxième luminosité (Q$_2$).

7. Unité de phare selon la revendication 6, **caractérisée en ce que** l'unité de phare comporte, en tant que source de lumière de phare, une source de lumière de phare secondaire (13La, 13Lb, 13Lc, 13Ra, 13Rb, 13Rc) qui est configurée pour éclairer, d'un côté par rapport au sens de la largeur du véhicule, une zone située en avant et vers l'extérieur du véhicule par rapport au sens de la largeur du véhicule, dans laquelle l'unité d'éclairage comporte une pluralité de sources de lumière de phare, et la valeur de référence (K$_1$-K$_3$), la valeur supérieure (U$_1$-U$_3$) et la valeur spécifique (I$_1$, I$_2$) sont réglées individuellement pour chacune des sources de lumière de phare (13La, 13Lb, 13Lc, 13Ra, 13Rb, 13Rc).

8. Unité de phare selon la revendication 7, **caractérisée en ce que** la valeur spécifique (I$_1$, I$_2$) d'une source de lumière de phare est plus grande que la valeur supérieure (U$_1$-U$_3$) d'une autre source de lumière de phare pour laquelle est réglée la référence la plus grande qui suit celle de la première source de lumière de phare.

9. Unité de phare selon l'une quelconque des revendications 1 à 8, **caractérisée en ce que** l'axe optique de la source de lumière de phare est fixé,

la source de lumière de phare dont l'axe optique est fixé est configurée pour éclairer avec la première luminosité (Q$_1$) lorsque l'angle d'inclinaison du véhicule atteint la valeur de référence (K$_1$-K$_3$) qui est réglé pour la source de lumière de phare, et est configurée pour éclairer avec la deuxième luminosité (Q$_2$) lorsque l'angle d'inclinaison du véhicule atteint la valeur supérieure (U$_1$-U$_3$) qui est réglé pour la source de lumière de phare.

10. Unité de phare selon l'une quelconque des revendications 1 à 9, **caractérisée en ce que** l'unité de phare comporte, en tant que source de lumière de phare, une source de lumière de phare secondaire qui est configurée pour éclairer, d'un côté par rapport au sens de la largeur du véhicule, une zone située en avant et vers l'extérieur du véhicule par rapport au sens de la largeur du véhicule,

pendant une période de temps partant du moment où l'angle d'inclinaison du véhicule atteint une valeur inférieure qui est plus petite que la valeur de référence (K$_1$-K$_3$) réglée pour la source de lumière de phare jusqu'au moment où l'angle d'inclinaison du véhicule atteint la valeur de référence (K$_1$-K$_3$), la source de lumière de phare secondaire éclaire avec une luminosité inférieure à la première luminosité (Q$_1$).

11. Unité de phare selon la revendication 10, **caractérisée en ce que** l'unité de phare comporte une pluralité de sources de lumière de phare,

la valeur de référence (K$_1$-K$_3$), la valeur supérieure (U$_1$-U$_3$) et la valeur inférieure de chacune des sources de lumière de phare secondaires sont réglées individuellement pour la source de lumière de phare,

la valeur supérieure ($U_1$-$U_3$) d'une source de lumière de phare secondaire est supérieure ou égale à la valeur inférieure d'une autre source de lumière de phare secondaire pour laquelle est réglée la valeur de référence la plus grande ($K_1$-$K_3$) qui suit celle de la première source de lumière de phare secondaire.

12. Système de phare destinée à être utilisée dans un véhicule qui penche dans les virages,
le système de phare comprenant une unité de phare (13L, 13R) selon l'une quelconque des revendications 1 à 11.

13. Système de phare destinée à être utilisée dans un véhicule qui penche dans les virages selon la revendication 12, comprenant en outre :

une partie de commande qui est configurée pour modifier la luminosité de la source de lumière de phare en fonction de l'angle d'inclinaison du véhicule ; et
une partie de détection qui est configurée pour détecter une variable disponible pour obtenir l'angle d'inclinaison du véhicule,
dans lequel, lorsque l'angle d'inclinaison du véhicule qui penche vers un côté par rapport au sens de la largeur du véhicule atteint la valeur de référence ($K_1$-$K_3$) qui est réglée pour la source de lumière de phare, la partie de commande provoque l'éclairage de la source de lumière de phare avec la première luminosité ($Q_1$), et lorsque l'angle d'inclinaison du véhicule atteint la valeur supérieure ($U_1$-$U_3$) qui est réglée pour la source de lumière de phare, la partie de commande provoque l'éclairage de la source de lumière de phare avec la deuxième luminosité ($Q_2$).

14. Véhicule qui penche dans les virages, le véhicule comprenant le système selon la revendication 12 ou 13.

15. Procédé de commande d'une unité de phare dans un véhicule qui penche dans les virages, dans lequel l'unité de phare comporte une source de lumière de phare dont la plage d'éclairage est contenue partiellement ou entièrement d'un côté du véhicule par rapport au sens de la largeur du véhicule lorsque le véhicule est dans la position verticale, le procédé comprenant :

la variation de la luminosité de la source de lumière de phare en fonction de l'angle d'inclinaison du véhicule,
l'éclairage de la source de lumière de phare avec une luminosité accrue jusqu'à une première luminosité ($Q_1$) lorsque l'angle d'inclinaison du véhicule qui penche vers le premier côté par rapport au sens de la largeur du véhicule prend une valeur de référence ($K_1$-$K_3$) qui est réglée pour la source de lumière de phare, **caractérisé par** la variation de la luminosité de la source de lumière de phare de la première luminosité ($Q_1$) à une deuxième luminosité ($Q_2$) qui est plus grande que la première luminosité ($Q_1$) lorsque l'angle d'inclinaison du véhicule passe de la valeur de référence ($K_1$-$K_3$) à une valeur supérieure ($U_1$-$U_3$) qui est plus grande que la valeur de référence ($K_1$-$K_3$).

FIG.1

FIG.2

FIG.3

BRIGHTNESS
(DUTY CYCLE(%))

13La

13Lb

13Lc

FIG.4

$Q_2$

$Q_1$

$Q_3$

13La

$T_1$

$K_1$

$U_1$

$I_1$

$J_1$

LEAN ANGLE(°)

13Lb

$T_2$

$K_2$

$U_2$

$I_2$

$J_2$

13Lc

$T_3$

$K_3$

$U_3$

FIG.5

(a)

10

LL₁
L₀
H ---- H
SH₁
LB
G

(b)

10

LL₁
L₀
H ---- H
SH₁
LB
G

(c)

10

LL₁
L₀
H ---- H
SH₁
LB
G

FIG.6

(a)

(b)

(c)

FIG.7

(a)

(b)

FIG.8

EP 2 657 078 B1

FIG.9

FIG.10

FIG.11

FIG.12

FIG.13

FIG.14

FIG.15

FIG.16

FIG.17

FIG.18

FIG.19

FIG.20

## REFERENCES CITED IN THE DESCRIPTION

**Patent documents cited in the description**

- US 20050270785 A1

- WO 2010061651 A